# EUROPEAN PATENT SPECIFICATION

(11) **EP 3 775 012 B1**
(45) Date of publication and mention of the grant of the patent: **03.09.2025**
(21) Application number: 19717648.0
(22) Date of filing: 29.03.2019
(51) Int. Cl.: C08K 3/16, C08K 3/22, C08K 5/098, C08L 77/00, C08L 77/06

(54) **CERIUM-STABILIZED POLYAMIDES AND PROCESSES FOR MAKING SAME**
CERIUM-STABILISIERTE POLYAMIDE UND VERFAHREN ZU DEREN HERSTELLUNG
POLYAMIDES STABILISÉS AU CÉRIUM ET LEURS PROCÉDÉS DE FABRICATION

(30) Priority: 30.03.2018 US 201862650731 P; 23.01.2019 US 201962795798 P
(43) Date of publication of application: 17.02.2021
(73) Proprietor: Ascend Performance Materials Operations LLC, Houston TX 77002 (US)
(72) Inventor: SPARKS, Bradley J., Pace, Florida 32571 (US); HENSARLING, Ryan M., Pace, Florida 32571 (US); SOMASIRI, Nanayakkara L., Pensacola, Florida 32514 (US)
(74) Representative: Kador & Partner Part mbB
(86) International application number: PCT/US2019/024815
(87) International publication number: WO 2019/191574

(56) References cited:
- US-A1- 2016 280 914
- US-B2- 9 752 006

## Description

### FIELD

The present disclosure relates to the stabilization of polyamides, particularly against heat degradation, to the additives used in such stabilization, and to the resultant stabilized polymeric compositions.

### BACKGROUND

Conventional polyamides are generally known for use in many applications including, for example, textiles, automotive parts, carpeting, and sportswear.

In some of these applications, the polyamides in question may be exposed to high temperatures, e.g., on the order of 150°C to 250°C. It is known that, when exposed to such high temperature, a number of irreversible chemical and physical changes affect the polyamide, which manifest themselves through several disadvantageous properties. The polyamide may, for example, become brittle or discolored. Furthermore, desirable mechanical properties of the polyamide, such as tensile strength and impact resilience, typically diminish from exposure to high temperatures. Thermoplastic polyamides, in particular, are frequently used in the form of glass fiber-reinforced molding compounds in construction materials. In many cases, these materials are subjected to increased temperatures, which lead to damage, e.g., thermooxidative damage, to the polyamide.

In some cases, heat stabilizers or heat stabilizer packages may be added to the polyamide mixture in order to improve performance, e.g., at higher temperatures. The addition of conventional heat stabilizer packages has been shown to retard some thermooxidative damage, but typically these heat stabilizer packages merely delay the damage and do not permanently prevent it. As mentioned above, examples of the thermooxidative damage include decreases in tensile strength and impact resilience.

In addition, conventional stabilizer packages have been found to be ineffective over higher temperature ranges, e.g., over particular temperature gaps such as from 180°C to 240°C or from 190°C to 230°C. In particular, the use of many known stabilizer packages yields polyamides that have stability/performance gaps over broad temperature ranges, e.g., the aforementioned temperature gaps. For example, polyamides that employ copper-based stabilizers yield polyamides that have performance gaps at temperatures above 180°C. Similarly, polyamides that employ polyol-based stabilizers yield polyamides that have performance gaps at temperatures above 190°C. Thus, when polyamides are exposed to these temperatures, the polyamides perform poorly, e.g., in terms of tensile strength and/or impact resilience, *inter alia.* Further, while many of these stabilizers may improve performance at some temperatures, each stabilizer package often presents its own set of additional shortcomings. Stabilizer packages that utilize iron-based stabilizers, for example, are known to require a high degree of precision in the average particle size of the iron compound, which presents difficulties in production. Furthermore, these iron-based stabilizer packages demonstrate stability issues, e.g., the polyamide may degrade during various production stages. As a result, the residence time during the various stages of the production process must be carefully monitored. Similar issues are present in polyamides that utilize zinc-based stabilizers.

As one example of a conventional stabilizer package, EP 2535365A1 discloses a polyamide molding compound comprising: (A) a polyamide mixture (27-84.99 wt.%) comprising (A1) at least one semiaromatic, semicrystalline polyamide having a melting point of 255 - 330°C, and (A2) at least one caprolactam-containing polyamide that is different from the at least one semiaromatic, semicrystalline polyamide (A1) and that has a caprolactam content of at least 50 wt.%; (B1) at least one filler and reinforcing agent (15-65 wt.%); (C) at least one thermal stabilizer (0.01-3 wt.%); and (D) at least one additive (0-5 wt.%). The polyamide molding compound comprises: (A) a polyamide mixture (27-84.99 wt.%) comprising (A1) at least one semiaromatic, semicrystalline polyamide having a melting point of 255 - 330°C, and (A2) at least one caprolactam-containing polyamide that is different from the at least one semiaromatic, semicrystalline polyamide (A1) and that has a caprolactam content of at least 50 wt.%. The sum of the caprolactam contained in polyamide (A1) and polyamide (A2) is 22-30 wt.%, with respect to the polyamide mixture. The polyamide mixture further comprises: (B1) at least one filler and reinforcing agent (15-65 wt.%); (C) at least one thermal stabilizer (0.01-3 wt.%); and (D) at least one additive (0-5 wt.%). No metal salts and/or metal oxides of a transition metal of the groups VB, VIB, VIIB or VIIIB of the periodic table are present in the polyamide molding compound.

GB 904,972 discloses a stabilized polyamide containing as stabilizers 0.5 to 2% by weight of hypophosphoric acid and/or a hypophosphate and 0.001 to 1% by weight of a water soluble cerium (III) salt and/or a water-soluble titanium (III) salt. Specified hydrophosphates are lithium, sodium, potassium, magnesium, calcium, barium, aluminium, cerium, thorium, copper, zinc, titanium, iron, nickel and cobalt hypophosphates. Specified water-soluble cerium (III) and titanium (III) salts are the chlorides, bromides, halides, sulphonates, formates and acetates. Specified polyamides are those derived from caprolactam, caprylic lactam, o -amino-undecanoic acid, the salts of adipic, suberic, sebacic or decamethylene dicarbonic acid with hexamethylene or decamethylene diamine, of heptane dicarboxylic acid with bis-(4-aminocyclohexyl)-methane, of tetramethylene diisocyanate and adipic acid and of aliphatic w-aminoalcohols and dicarboxylic acids each with 4 to 34 carbon atoms between the functional groups. The stabilizers may be added to the polyamides during or after the polycondensation reaction. Delustrants, e.g. cerium dioxide, titanium dioxide, thorium dioxide or ytrium trioxide may also be added to the polyamides. Examples (1) and (2) describe the polymerization of:-(1) hexamethylene diammonium adipate in the presence of disodium dihydrogen hypophosphate hexahydrate and (a) titanium (III) chloride hexahydrate, (b) cerium (III) chloride; (2) caprolactam in the presence of (a) thorium hypophosphate and titanium (III) chloride hexahydrate, whilst in Example (3) polycaprylic lactam is mixed with tetrasodium hypophosphate, titanium (III) acetate and titanium dioxide.

Also, EP 1832624A1, discloses the use of a radical catcher for the stabilization of organic polymer against photochemically, thermally, physically and/or chemically induced dismantling through free radical, preferably against UV-light exposure. Cerium dioxide is used as an inorganic radical catcher. Independent claims are included for: (1) a polymer composition comprising cerium dioxide, a UV-absorber and/or a second radical catcher; (2) agent for the stabilization of organic polymer comprising a combination of cerium dioxide, a UV-absorber and/or at least a second radical catcher; and (3) a procedure for the stabilization of organic polymer, preferably in the form of polymer based formulation, lacquer, color or coating mass against photochemically, thermally, physically and/or chemically induced dismantling through free radical, comprising mixing cerium dioxide as inorganic radical catcher, optionally in combination with the UV-absorber or with the second radical catcher.

And, US2004/0006168A1 discloses a flame retardant molding composition. The composition contains a polymeric component, preferably a polyamide, red phosphorus, zinc borate, talcum and a lanthanide compound. The composition is characterized by its combined flame resistance and good mechanical properties. The composition may also contain fillers or reinforcing substances, an impact modifier and further conventional additives.

US2016/0280914 A1 relates to polyamide molding compounds which have an improved resistance to heat-aging and comprise the following compositions: (A) 25 to 84.99 wt.% of at least one polyamide, (B) 15 to 70 wt.% of at least one filler and reinforcing means, (C) 0.01 to 5.0 wt.% of at least one inorganic radical interceptor, (D) 0 to 5.0 wt.% of at least one heat stabilizer which is different from the inorganic free-radical scavenger under (C), and (E) 0 to 20.0 wt.% of at least one additive.

Even in view of the references, the need exists for an improved polyamide compound that demonstrates superior performance over a broad temperature range, in particular, that demonstrates significant improvements in tensile strength and impact resilience (among other performance characteristics) at higher temperature ranges, e.g., above 190°C or from 190°C to 230°C (temperature gaps), which is where many polyamide structures are utilized, for example in automotive applications that deal with engine heat.

### SUMMARY

The present disclosure relates to a heat-stabilized polyamide composition comprising from 25 wt.% to 90 wt.% of an amide polymer (optionally a first amide polymer and a second amide polymer), from 0.01 wt.% to 10 wt.% of a cerium-based heat stabilizer, a second heat stabilizer, e.g., a copper-based compound, optionally present in an amount ranging from 0.01 wt.% to 5 wt.%, wt.%wt.%a halide additive, and less than 0.3 wt.% of a stearate additive. A weight ratio of halide additive to stearate additive is less than 45.0, e.g., less than 10. The polyamide composition may have a tensile strength of at least 75 MPa, when heat aged for 3000 hours at a temperature of 180°C and measured at 23°C or when heat aged for 3000 hours over a temperature range of from 190°C to 230°C, and measured at 23°C. The cerium-based heat stabilizer may be a cerium ligand compound selected from the group consisting of cerium hydrates, cerium acetates, cerium oxyhydrate, cerium phosphate, and combinations thereof and the activation temperature of the cerium-based heat stabilizer is at least 10% greater than the activation temperature of the second heat stabilizer. In some cases, the cerium-based heat stabilizer is a cerium-based ligand compound; the second heat stabilizer is a copper-based heat stabilizer, and the polyamide composition has a tensile strength of at least 80 MPa, when heat aged for 3000 hours at a temperature of at least 220 °C and measured at 23°C.

In some embodiments, the disclosure relates to a heat-stabilized polyamide composition comprising from 25 wt.% to 99 wt.% of an amide polymer, from 0.01 wt.% to 10 wt.% of a cerium-based heat stabilizer, and a second heat stabilizer. The amide polymer may comprise greater than 90 wt.%, based on the total weight of the amide polymer, of a low caprolactam content polyamide; and less than 10 wt.%, based on the total weight of the amide polymer, of a non-low caprolactam content polyamide and/or a non-low melt temperature polyamide. The low caprolactam content polyamide may comprise PA-6,6/6; PA-6T/6; PA-6,6/6T/6; PA-6,6/6I/6; PA-6I/6; or 6T/6I/6; or combinations thereof and may comprise less than 50 wt.% caprolactam. The low melt temperature polyamide may have a melt temperature below 210°C. The polyamide composition may have a tensile strength of at least 75 MPa, when heat aged for 3000 hours over a temperature range of from 190°C to 230°C, and measured at 23°C.

In some embodiments, the disclosure relates to a heat-stabilized polyamide composition comprising from 25 wt.% to 99 wt.% of an amide polymer, from 0.01 wt.% to 10 wt.%, e.g,. from 10 ppm to 9000 ppm, of cerium oxide and/or cerium oxyhydrate, a second heat stabilizer, a halide additive, and less than 0.3 wt.% of a stearate additive. A weight ratio of halide additive to stearate additive may be less than 45.0, and the polyamide composition may optionally have a tensile strength of at least 75 MPa, when heat aged for 3000 hours at a temperature of at least 180°C and measured at 23°C. The polyamide composition may also comprise iodide (ion) present in an amount ranging from 30 wppm to 5000 wppm. The amide polymer may comprise greater than 90 wt.%, based on the total weight of the amide polymer, of a low caprolactam content polyamide; and less than 10 wt.%, based on the total weight of the amide polymer, of a non-low caprolactam content polyamide or a non-low melt temperature polyamide. The polyamide composition may have a tensile strength of at least 75 MPa, when heat aged for 3000 hours over a temperature range of from 190°C to 230°C, and measured at 23°C.

### DETAILED DESCRIPTION

This disclosure relates to heat-stabilized polyamide compositions that comprise unique and synergistic heat stabilizer packages, which provide for significant improvements in performance, e.g., tensile strength and/or impact resilience, at higher temperatures. Conventional heat stabilizer packages suffer from stability/performance gaps over broad temperature ranges, and these performance gaps often occur at temperatures at which polyamide structures, e.g., automotive component applications are employed. As a result, the polyamide structures demonstrate performance and/or structural failures. The disclosed polyamide compositions and structures made therefrom allow for uses in applications that require exposure to higher temperatures. Improvement in heat-aging resilience is particularly desirable, because it can result in longer lifespans for thermally loaded polyamide components. Furthermore, improved heat-aging resilience may diminish the failure risk of thermally loaded polyamide components.

It has now been discovered that the use of synergistic heat stabilizers (heat stabilizer packages), preferably in specific amounts, unexpectedly provides for superior performance over broad temperature ranges. More specifically, the polyamide compositions disclosed herein have been surprisingly found to achieve significant performance improvements at temperatures ranging from 190°C to 230°C, e.g., 190°C to 210°C, especially when exposed to such temperatures for prolonged periods of time. Importantly, this temperature range is where many polyamide structures are utilized, for example in automotive applications. Exemplary automotive applications may include a variety of "under-the-hood" uses, such as cooling systems for internal combustion engines. In particular, many polyamide structures are employed in turbo chargers and charge air cooler systems, which expose the polyamide to high temperatures. Due to the unexpectedly superior performance of the heat-stabilized polyamide compositions, they are particularly well-suited to these applications.

In addition, the inventors have found that the use of particular (greater) quantities of low caprolactam content polyamide, e.g., PA-66/6 copolymer, e.g., greater than 90 wt.%, (and thus lower amount of higher caprolactam content polyamides, e.g., PA-6) surprisingly provides for better heat stability over the aforementioned temperature ranges, especially when employed along with the synergistic heat stabilizer packages. Also, it has unexpectedly been found that the use of particular (greater) quantities of polyamides having low melt temperatures, e.g., below 210°C, (and thus lower amounts of higher melt temperature polyamides, e.g., PA-6) actually improves heat stability. Traditionally, it has been believed that the use of low caprolactam content polyamides and/or low melt temperature polyamides would be detrimental to the ultimate high temperature performance of the resultant polymer composition, e.g., since these low temperature polyamides have lower melt temperatures than high caprolactam content polyamides. The inventors have unexpectedly found that the addition of certain quantities of low caprolactam content polyamides and/or low melt temperature polyamides actually improves high temperature heat performance. Without being bound by theory, it is postulated that, at higher temperatures, these amide polymers actually "unzip" and shift toward the monomer phase, which surprisingly leads to the high heat performance improvements. Further, it is believed that the use of the polyamides having low melt temperatures actually provides for a reduction of the temperature at which the unzipping occurs, thus unexpectedly further contributing to improved thermal stability.

Some polyamides may be low caprolactam content polyamides as well as low melt temperature polyamides, e.g., PA-66/6. In other cases, low melt temperature polyamides may not include some low caprolactam content polyamides, and *vice versa.*

In some cases, the heat-stabilized polyamide compositions disclosed herein comprise an amide polymer and a particular stabilizer package comprising a first heat stabilizer and a second heat stabilizer. These components are present in the heat-stabilized polyamide composition at the specific amount, limits, and ratios discussed herein. The first heat stabilizer may comprise a cerium-based compound, e.g., a cerium-based compound. The second heat stabilizer may vary, and, in preferred embodiments, it is a copper-based compound, e.g., a copper halide. In some embodiments, the cerium-based heat stabilizer is employed in particular amounts or concentration ranges. In some cases, the cerium-based heat stabilizer and the second heat stabilizer are utilized in amounts such that the weight ratio of the cerium-based heat stabilizer to the second heat stabilizer falls within a certain range or limit, as discussed herein.

In some embodiments, the heat stabilizer comprises specific oxide/oxyhydrate compounds, preferably cerium oxide and/or cerium oxyhydrate. In some cases , cerium oxyhydrate and cerium oxide may have a CAS number of 1306-38-3; cerium hydrate may have a CAS number of 12014-56-1.
- Cerium oxyhydrate = CeO₂*H₂O
- Cerium oxide = CeO₂; CAS 1306-38-3
- Cerium hydrate = cerium hydroxide = Ce(OH)₄

The polyamide further comprises (in addition to the cerium-based compound and the second heat stabilizer) a halide additive, e.g., a chloride, a bromide, and/or an iodide. In some cases, the purpose of the halide additive is to improve the stabilization of the polyamide composition. Surprisingly, the inventors have discovered that, when employed as described herein, the halide additive works synergistically with the stabilizer package by mitigating free radical oxidation of polyamides. Exemplary halide additives include potassium chloride, potassium bromide, and potassium iodide. In some cases, these additives are utilized in amounts discussed herein.

The heat-stabilized polyamide comprises the stearate additives, e.g., calcium stearates or zinc stearates, in an amount of less than 0.3 wt.%. Generally, stearates are not known to contribute to stabilization; rather, stearate additives are typically used for lubrication and/or to aid in mold release. Because synergistic small amounts are employed, the disclosed heat-stabilized polyamide compositions are able to effectively produce polyamide structures without requiring high amounts of stearate lubricants typically present in conventional polyamides, thus providing production efficiencies. Also, the inventors have found that the small amounts of stearate additive is reduces the potential for formation of detrimental stearate degradation products. In particular, the stearate additives have been found to degrade at higher temperatures, giving rise to further stability problems in the polyamide compositions.

The inventors have also discovered that when the weight ratio of the halide additive to the stearate additive is maintained within certain ranges and/or limits, the stabilization is synergistically improved. In some embodiments, the weight ratio of halide additive, e.g., bromide or iodide, to stearate additive, e.g., calcium stearate or zinc stearate is less than 45.0, e.g., less than 40.0, less than 35.0, less than 30.0, less than 25.0, less than 20.0, less than 15.0, less than 10.0, less than 5.0, less than 4.1, less than 4.0, or less than 3.0. In terms of ranges, this weight ratio may range from 0.1 to 45, e.g., from 0.1 to 35, from 0.5 to 25, from 0.5 to 20.0, from 1.0 to 15.0, from 1.0 to 10.0, from 1.5 to 8, from 1.5 to 6.0, from 2.0 to 6.0, or from 2.5 to 5.5. In terms of lower limits, this ratio may be greater than 0.1, e.g., greater than 0.5, greater than 1.0, greater than 1.5, greater than 2.0, greater than 2.5, greater than 5.0, or greater than 10.0.

In some cases, the ratio of the weight ratio of the second heat stabilizer, e.g., copper-based stabilizer, to the halide additive is less than 0.175, e.g., less than 0.15, less than 0.12, less than 0.1, less than 0.075, less than 0.05, or less than 0.03. In terms of ranges, the weight ratio of the cerium-based heat stabilizer to the halide may range from 0.001 to 0.174, e.g., from 0.001 to 0.15, from 0.005 to 0.12, from 0.01 to 0.1, or from 0.5 to 0.5. In terms of lower limits, the weight ratio of the cerium-based heat stabilizer to the halide is at least 0.001, e.g., at least 0.005, at least 0.01, or at least 0.5.

Importantly, the weight ratio of the cerium-based heat stabilizer to the second heat stabilizer, e.g., a copper-based heat stabilizer, may be less than 8.5:1, preferably the weight ratio of the cerium-based heat stabilizer to the second heat stabilizer ranges from 0.1 to 8.5. This weight ratio may be referred to herein as the "cerium ratio." Preferably the second heat stabilizer does not comprise a stearate compound, e.g., calcium stearate, and the ratio is calculated as such. In other embodiments, the cerium ratio is greater than 14.5. Additional limits and ranges for the cerium ratio are provided herein. Without being bound by theory, it is believed that the use of the specific amounts of cerium-based heat stabilizer (as mentioned herein) affect the activation of the stabilizer package. And the activation provided by the aforementioned stabilizer packages synergistically contributes to improvements in the profile of the stabilization, especially over broader (higher) temperature ranges. In some cases, the cerium-based heat stabilizer may have a particular activation temperature and the second heat stabilizer may have a particular activation temperature different from the cerium-based heat stabilizer. The cerium-based heat stabilizer, for example, may have a higher activation temperature than the second heat stabilizer, e.g., a copper-based compound. The synergistic combination of the two heat stabilizers (at the aforementioned cerium ratios) allows the cerium-based heat stabilizer to prevent thermal damage to the polyamide composition, particularly at higher temperatures, while the second heat stabilizer supplements the prevention of thermal damage at (slightly) lower temperatures. Thus, the weight ratio of the cerium-based heat stabilizer to the second heat stabilizer has been found to have an effect on the performance properties, e.g., tensile strength and impact resilience, of the resultant polyamide.

In contrast, although some conventional heat stabilizer packages employ cerium and other stabilizers, there is little or no instruction as to the importance of the weight ratio of cerium-based heat stabilizer to second (non-stearate) heat stabilizer, as disclosed herein. Further, some conventional stabilizer packages may rely on combinations of second heat stabilizers, e.g., combinations of copper-based compounds and stearates such as calcium stearate. Many of these packages, however, utilize much lower amounts of copper-based compound and high amounts of stearates and/or hypophosphoric acid and/or a hypophosphate, and as a result do not provide improvements in the profile of the stabilization, e.g., the consistent retardation of thermal damage over the broad temperature ranges discussed herein. Phosphorus-based compounds are generally known in the art as a class of antioxidant stabilizers. It has been found, however, that these phosphorous stabilizers provide only short-term stability, and as such are not desirable. The disclosed stabilizer packages have been found to function effectively without the need for additional phosphorus-based stabilizers such as hypophosphoric acid and/or a hypophosphate. As a result, the use of these additives in heat-stabilized polyamides can be beneficially eliminated and the stabilization package simplified.

As one result of using these components, preferably in the specified ranges, limits, and/or ratios, the heat-stabilized polyamide compositions demonstrate unexpectedly high tensile strength after exposure to high temperatures. Thus, by incorporating the heat stabilizer packages disclosed herein, the inventors have found that the performance of polyamide compositions can be improved, e.g., at higher temperatures, and that damage typically suffered by polyamide compositions at higher temperatures, e.g., theremooxidative damage, is mitigated. As one example, the polyamide compositions beneficially have a tensile strength of at least 75 MPa, when heat aged for 3000 hours at a temperature of at least 180°C and measured at 23°C (as measured using ISO 527-1 (2018) for tensile strength and ISO 188 (2018) for heat age). These heat stabilizer packages thus allow for the improved use and functionality of polyamide compositions in environments of higher temperature, e.g., in automotive applications. Whereas polyamide compositions already known in the art become much more brittle after being exposed to such high temperatures, the compositions disclosed herein are able to maintain a substantially higher tensile strength.

### Heat Stabilizer Packages

The heat stabilizer packages disclosed herein improve the utility and functionality of polyamide compositions by mitigating, retarding, or preventing the effects damage, e.g., thermooxidative damage, that results from exposure of polyamides to heat. In one embodiment, the heat stabilizer package comprises the cerium-based heat stabilizer, e.g., the cerium-based heat stabilizer, and the second heat stabilizer. In some cases, the amount of the cerium-based heat stabilizer is present in an amount greater than the second heat stabilizer. In some cases, the polyamide composition beneficially comprises little or no stearates, e.g., calcium stearate or zinc stearate. In some cases the weight ratio of the halide additive to the stearate additive and/or the weight ratio of the second heat stabilizer to the halide additive are maintained within certain ranges and/or limits.

The cerium-based heat stabilizer, e.g., the cerium-based heat stabilizer, may vary widely. In some cases, the cerium-based heat stabilizer is a compound that comprises cerium. In some cases, the cerium-based heat stabilizer is generally of the structure CeXₙ, where X is a ligand and n is a non-zero integer. That is to say, in some embodiments, the cerium-based heat stabilizer is a cerium-based ligand compound. The inventors have found that particular cerium ligands are able to stabilize polymides particularly well, especially when utilized in the aforementioned amounts, limits, and/or ratios. In some cases, the ligand may be an oxide and/or an oxyhydrate.

In some embodiments, the ligand(s) may be selected from the group consisting of acetates, hydrates, oxyhydrates, phosphates, bromides, chlorides, oxides, nitrides, borides, carbides, carbonates, ammonium nitrates, fluorides, nitrates, polyols, amines, phenolics, hydroxides, oxalates, sulfates, aluminates, and combinations thereof. In some preferred embodiments, the cerium-based heat stabilizer may comprise a cerium hydrate, or cerium acetate, or a combination thereof. In some cases, the cerium-based heat stabilizer may comprise cerium hydrate, cerium acetate, cerium oxyhydrate, or cerium phosphate, or combinations thereof. The inventors have found that, surprisingly, employing these specific cerium-based heat stabilizers results in a heat stabilizer package that provides for the benefits discussed herein. By selecting multiple cerium-based heat stabilizers, one may be able to synergistically improve the heat stabilization effect of the individual heat stabilizer. Furthermore, a polyamide composition comprising multiple cerium-based heat stabilizers may provide improved heat stability over a broader range of temperatures or at higher temperatures. In some cases, the polyamide composition may not utilize cerium phosphate.

In some embodiments, the polyamide composition comprises the cerium-based heat stabilizer in an amount ranging from 0.01 wt.% to 10.0 wt.%, e.g., from 0.01 wt.% to 8.0 wt.%, from 0.01 wt.% to 7.0 wt.%, from 0.02 wt.% to 5.0 wt.%, from 0.03 to 4.5 wt.%, from 0.05 wt.% to 4.5 wt.%, from 0.07 wt.% to 4.0 wt.%, from 0.07 wt.% to 3.0 wt.%, from 0.1 wt.% to 3.0 wt.%, from 0.1 wt.% to 2.0 wt.%, from 0.2 wt.% to 1.5 wt.%, from 0.1 wt.% to 1.0 wt.%, or from 0.3 wt.% to 1.2 wt.%. In terms of lower limits, the polyamide composition may comprise greater than 0.01 wt.% cerium-based heat stabilizer, e.g., greater than 0.02 wt.%, greater than 0.03 wt.%, greater than 0.05 wt.%, greater than 0.07 wt.%, greater than 0.1 wt.%, greater than 0.2 wt.%, or greater than 0.3 wt.%. In terms of upper limits, the polyamide composition may comprise less than 10.0 wt.% cerium-based heat stabilizer, e.g., less than 8.0 wt.%, less than 7.0 wt.%, less than 5.0 wt.%, less than 4.5 wt.%, less than 4.0 wt.%, less than 3.0 wt.%, less than 2.0 wt.%, less than 1.5 wt.%, less than 1.2 wt.%, less than 1.0 wt.%, or less than 0.7 wt.%.

In some cases, the polyamide composition comprises little or no cerium hydrate, e.g., less than 10.0 wt.% cerium hydrate, e.g., less than 8.0 wt.%, less than 7.0 wt.%, less than 5.0 wt.%, less than 4.5 wt.%, less than 4.0 wt.%, less than 3.0 wt.%, less than 2.0 wt.%, less than 1.5 wt.%, less than 1.2 wt.%, less than 1.0 wt.%, less than 0.7 wt.%, less than 0.5 wt.%, less than 0.3 wt.%, or less than 0.1 wt.%. In some cases, the polyamide composition comprises substantially no cerium hydrate, e.g., no cerium hydrate.

In some embodiments, the polyamide composition comprises cerium oxide (optionally as the only cerium-based heat stabilizer), or cerium oxyhydrate (optionally as the only cerium-based heat stabilizer), or a combination of cerium oxide and cerium oxyhydrate in an amount ranging from 10 ppm to 1 wt.%, e.g., from 10 ppm to 9000 ppm, from 20 ppm to 8000 ppm, from 50 ppm to 7500 ppm, from 500 ppm to 7500 ppm, from 1000 ppm to 7500 ppm, from 2000 ppm to 8000 ppm, from 1000 ppm to 9000 ppm, from 1000 ppm to 8000 ppm, from 2000 ppm to 8000 ppm, from 2000 ppm to 7000 ppm, from 2000 ppm to 6000 ppm, from 2500 ppm to 7500 ppm, from 3000 ppm to 7000 ppm, from 3500 ppm to 6500 ppm, from 4000 ppm to 6000 ppm, or from 4500 ppm to 5500 ppm.

In terms of lower limits, the polyamide composition may comprise greater than 10 ppm cerium oxide, or cerium oxyhydrate, or a combination thereof, e.g., greater than 20 ppm, greater than 50 ppm, greater than 100 ppm, greater than 200 ppm, greater than 500 ppm, greater than 1000 ppm, greater than 2000 ppm, greater than 2500 ppm, greater than 3000 ppm, greater than 3200 ppm, greater than 3300 ppm, greater than 3500 ppm, greater than 4000 ppm, or greater than 4500 ppm. In terms of upper limits, the polyamide composition may comprise less than 1 wt.% cerium oxide, or cerium oxyhydrate, or a combination thereof, e.g., less than 9000 ppm, less than 8000 ppm, less than 7500, less than 7000 ppm, less than 6500 ppm, less than 6000 ppm, or less than 5500 ppm.

In some embodiments, where cerium oxide, or cerium oxyhydrate, or a combination of cerium oxide and cerium oxyhydrate is utilized, the polyamide comprises cerium (not including ligand) in an amount ranging from 10 ppm to 9000 ppm, e.g., from 20 ppm to 7000 ppm, from 50 ppm to 7000 ppm, from 50 ppm to 6000 ppm, from 50 ppm to 5000 ppm, from 100 ppm to 6000 ppm, from 100 ppm to 5000 ppm, from 200 ppm to 4500 ppm, from 500 ppm to 5000 ppm, from 1000 ppm to 5000 ppm, from 1000 ppm to 4000 ppm, 1500 ppm to 4500 ppm, from 2000 ppm to 5000 ppm, from 2000 ppm to 4500 ppm, from 2000 ppm to 4000 ppm, from 2500 ppm to 3500 ppm, from 2700 ppm to 3300 ppm, or from 2800 ppm to 3200 ppm.

In terms of lower limits, the polyamide composition comprises cerium (not including ligand) in an amount greater than 10 ppm, e.g., greater than 20 wppm, greater than 50 wppm, greater than 100 wppm, greater than 200 wppm, greater than 500 wppm, greater than 1000 wppm, greater than 1500 wppm, greater than 2000 wppm, greater than 2500 wppm, greater than 2700 wppm, or greater than 2800 wppm. In terms of upper limits, the polyamide composition comprises cerium (not including ligand) in an amount less than 9000 ppm, e.g., less than 7000 ppm, less than 6000 ppm, less than 5000 ppm, less than 4500 ppm, less than 4000 ppm, less than 3500 ppm, less than 3300 ppm, or less than 3200 ppm.

The second heat stabilizer may vary widely. The inventors have found that particular second heat stabilizers unexpectedly provide for synergistic results, especially when utilized in the aforementioned amounts, limits, and/or ratios and with the cerium-based stabilizer, stearate additive, and halide additive.

In some embodiments, the second heat stabilizer may be selected from the group consisting of phenolics, amines, polyols, and combinations thereof. In some cases, the second heat stabilizer may comprise such phenolics as N,N'-hexamethylene-bis-3-(3,5-di-tert-butyl-4-hydroxyphenyl)-propionamide, bis-(3,3-bis-(4'-hydroxy-3'-tert-butylphenyl)-butanoic acid)-glycol ester, 2,1'-thioethylbis-(3-(3,5-di-tert-butyl-4-hydroxyphenyl)-propionate, 4-4'-butylidene-bis-(3-methyl-6-tert-butylphenol), or triethyleneglycol-3-(3-tert-butyl-4-hydroxy-5-methylphenyl)-propionate, or combinations thereof.

In preferred embodiments, the second heat stabilizer comprises a copper-based stabilizer. The inventors have surprisingly found that the use of the copper-based stabilizer and the cerium-based stabilizer in the amounts discussed herein has a synergistic effect. Without being bound by theory, it is believed that the combination of the activation temperatures of the cerium-based heat stabilizer and the copper-based stabilizer unexpectedly provide for thermooxidative stabilization at particularly useful ranges, e.g., 190°C to 230°C or from 190°C to 210°C. This particular range has been shown to present a performance gap when conventional stabilizer packages are employed. By utilizing the combination of the copper-based stabilizer and the cerium-based stabilizer in the amounts discussed herein thermal stabilization is unexpectedly achieved.

By way of non-limiting example, the copper-based compound of the second heat stabilizer may comprise compounds of mono- or bivalent copper, such as salts of mono- or bivalent copper with inorganic or organic acids or with mono- or bivalent phenols, the oxides of mono- or bivalent copper, or complex compounds of copper salts with ammonia, amines, amides, lactams, cyanides or phosphines, and combinations thereof. In some preferred embodiments, the copper-based compound may comprise salts of mono- or bivalent copper with hydrohalogen acids, hydrocyanic acids, or aliphatic carboxylic acids, such as copper(I) chloride, copper(I) bromide, copper(I) iodide, copper(I) cyanide, copper(II) oxide, copper(II) chloride, copper(II) sulfate, copper(II) acetate, or copper (II) phosphate. Preferably, the copper-based compound is copper iodide and/or copper bromide. The second heat stabilizer may be employed with a halide additive discussed below. Copper stearate, as a second heat stabilizer (not as a stearate additive) is also contemplated.

In some embodiments, the polyamide composition comprises the second heat stabilizer in an amount ranging from 0.001 wt.% to 5.0 wt.%, e.g., from 0.005 wt.% to 5.0 wt.%, from 0.01 wt.% to 5.0 wt.%, from 0.01 wt.% to 4.0 wt.%, from 0.02 wt.% to 3.0 wt.%, from 0.03 to 2.0 wt.%, from 0.03 wt.% to 1.0 wt.%, from 0.04 wt.% to 1.0 wt.%, from 0.05 wt.% to 0.5 wt.%, from 0.05 wt.% to 0.2 wt.%, or from 0.07 wt.% to 0.1 wt.%. In terms of lower limits, the polyamide composition may comprise greater than 0.001 wt.% second heat stabilizer, e.g., greater than 0.005 wt.%, greater than 0.01 wt.%, greater than 0.02 wt.%, greater than 0.03 wt.%, greater than 0.035 wt.%, greater than 0.04 wt.%, greater than 0.05 wt.%, greater than 0.07 wt.%, or greater than 0.1 wt.%. In terms of upper limits, the polyamide composition may comprise less than 5.0 wt.% second heat stabilizer, e.g., less than 4.0 wt.%, less than 3.0 wt.%, less than 2.0 wt.%, less than 1.0 wt.%, less than 0.5 wt.%, less than 0.2 wt.%, less than 0.1 wt.%, less than 0.05 wt.%, or less than 0.035 wt.%.

In cases where the second heat stabilizer is a copper-based stabilizer, the copper-based stabilizer may be present in the heat stabilizer package (and in the polyamide composition) in the amounts discussed herein with respect to the second heat stabilizer generally.

As noted above, the cerium ratio has unexpectedly been found to greatly affect the overall heat stability of the resultant polyamide composition. In some embodiments, the cerium ratio is less than 8.5, e.g., less than 8.0, less than 7.5, less than 7.0, less than 6.5, less than 6.0, less than 5.5, less than 5.0, less than 4.5, less than 4.0, less than 3.5, less than 3.0, less than 3.5, less than 3.0, less than 2.5, less than 2.0, less than 1.5, less than 1.0, or less than 0.5. In terms of ranges, the cerium ratio may range from 0.1 to 8.5, e.g., from 0.2 to 8.0; from 0.3 to 8.0, from 0.4 to 7.0, from 0.5 to 6.5, from 0.5 to 6, from 0.7 to 5.0, from 1.0 to 4.0, from 1.2 to 3.0, or from 1.5 to 2.5. In terms of lower limits, the cerium ratio may be greater than 0.1, e.g., greater than 0.2, greater than 0.3, greater than 0.5, greater than 0.5, greater than 0.7, greater than 1.0, greater than 1.2, greater than 1.5, greater than 2.0, greater than 3.0, or greater than 4.0.

In some embodiments, the cerium ratio is greater than 14.5, e.g., greater than 15.0, greater than 16.0, greater than 18.0, greater than 20.0, greater than 25.0, greater than 30.0, or greater than 35.0. In terms of ranges, the cerium ratio may range from 14.5 to 50.0, e.g., from 14.5 to 40.0; from 15.0 to 35.0, from 16.0 to 30.0, from 18.0 to 30.0, from 18.0 to 25.0, or from 18.0 to 23.0. In terms of upper limits, the cerium ratio may be less than 50.0, e.g., less than 40.0, less than 35.0, less than 30.0, less than 25.0, or less than 23.0.

In some embodiments, the cerium ratio is greater than 5, e.g., greater than 6.0, greater than 7.0, greater than 8.0, or greater than 9.0. In terms of ranges, the cerium ratio may range from 5.0 to 50.0, e.g., from 5 to 40.0; from 5.0 to 30.0, from 5.0 to 20.0, from 5.0 to 15.0, from 7.0 to 15.0, or from 8.0 to 13.0. In terms of upper limits, the cerium ratio may be less than 50.0, e.g., less than 40.0, less than 30.0, less than 20.0, less than 15.0, or less than 13.0.

The halide additive may vary widely. In some cases, the halide additive may be utilized with the second heat stabilizer. In some cases, the halide additive is not the same component as the second heat stabilizer, e.g., the second heat stabilizer, copper halide, is not considered a halide additive. Halide additive are generally known and are commercially available. Exemplary halide additives include iodides and bromides. Preferably, the halide additive comprises a chloride, an iodide, and/or a bromide.

In some embodiments, the halide additive is present in the polyamide composition in an amount ranging from 0.001 wt.% to 5 wt.%, e.g., 0.001 wt.% to 2 wt.%, 0.01 wt.% to 1 wt.%, from 0.01 wt.% to 0.75 wt.%, from 0.01 wt.% to 0.75 wt.%, from 0.05 wt.% to 0.75 wt.%, from 0.05 wt.% to 0.5 wt.%, from 0.075 wt.% to 0.75 wt.%, or from 0.1 wt.% to 0.5 wt.%. In terms of upper limits, the halide additive may be present in an amount less than 5 wt.%, e.g., less than 1 wt.%, less than 2 wt.%, less than 0.75 wt.%, or less than 0.5 wt.%. In terms of lower limits, the halide additive may be present in an amount greater than 0.001 wt.%, e.g., greater than 0.01 wt.%, greater than 0.05 wt.%, greater than 0.075 wt.%, or greater than 0.1 wt.%.

In some cases, for example, where cerium oxides/oxyhydrates are employed as the first heat stabilizer, the weight ratio of cerium oxide/oxyhydrate stabilizer to iodide has been shown to demonstrate unexpected heat performance. Without being bound by theory, it is postulated that iodide is important to the regeneration of the cerium, possibly providing the ability of some cerium ions to return to the original state, which leads to improved and more consistent heat performance over time. In some cases, when cerium oxide and/or cerium oxyhydrate are employed, particular (higher) amounts of iodide are used in conjunction therewith. Beneficially, when these amounts of iodide and cerium oxide/oxyhydrate and/or weight ratios thereof are employed, the use of bromine-containing components can advantageously be eliminated. In addition, iodide ion may play a role in stabilizing higher oxidation states of cerium which could further contribute to the heat stability of cerium oxide/oxyhydrate system.

In some embodiments, iodide (total iodide ion, e.g., chloride and/or bromide) is present in an amount ranging from 30 wppm to 10000 wppm, e.g., from 100 wppm to 8000 wppm, from 500 wppm to 8000 wppm, from 500 wppm to 6000 wppm, from 1000 wppm to 6000 wppm, from 1000 wppm to 5000 wppm, from 2000 wppm to 4000 wppm, or from 2500 wppm to 3500 wppm. In terms of lower limits, the iodide may be present in an amount at least 30 wppm, e.g,. at least 50 wppm, at least 75 wppm, at least 100 wppm, at least 500 wppm, at least 1000 wppm at least 2000 wppm, or at least 2500 wppm. In terms of upper limits, the iodide may be present in an amount less than 10000 wppm, e.g., less than 8000 wppm, less than 6000 wppm, less than 5000 wppm, less than 4000 wppm, less than 3500 wppm, or less than 3000 wppm.

In some embodiments, when cerium oxide and/or cerium oxyhydrate are employed, iodide is present in an amount ranging from 30 wppm to 5000 wppm, e.g., from 30 wppm to 3000 wppm, from 50 wppm to 2000 wppm, from 50 wppm to 1000 wppm, from 75 wppm to 750 wppm, from 100 wppm to 500 wppm, from 150 wppm to 450 wppm, or from 200 wppm to 400 wppm. In terms of lower limits, the iodide may be present in an amount at least 30 wppm, e.g,. at least 50 wppm, at least 75 wppm, at least 100 wppm, at least 150 wppm, or at least 200 wppm. In terms of upper limits, the iodide may be present in an amount less than 5000 wppm, e.g., less than 3500 wppm, less than 3000 wppm, less than 2000 wppm, less than 1000 wppm, less than 750 wppm, less than 500 wppm, less than 450 wppm, or less than 400 wppm.

Total iodide content includes iodide from all iodide sources, e.g., first and second heat stabilizers, e.g., copper iodide, and additives, e.g., potassium iodide.

The stearate additive may vary widely and is present in the composition in an amount of less than 0.3 wt.%. Stearate additive are generally known and are commercially available. Exemplary stearate additives include zinc stearate and calcium stearate. Preferably, the halide additive comprises an iodide and/or a bromide.

The stearate additive may be present in synergistic small amounts. For example, the polyamide composition may comprise less than 1.0 wt.% stearate additive, e.g., less than 0.5 wt.%, less than 0.3 wt.%, less than 0.25 wt.%, less than 0.2 wt.%, less than 0.15 wt.%, less than 0.10 wt.%, less than 0.05 wt.%, less than 0.03 wt.%, less than 0.01 wt.%, or less than 0.005 wt.%. In terms of ranges, the polyamide composition may comprise from 1 wppm to 1.0 wt.% stearate additive, e.g., from 1 wppm to 0.5 wt.%, from 1 wppm to 0.3 wt.%, from 1 wppm to 0.25 wt.%, from 5 wppm to 0.1 wt.%, from 5 wppm to 0.05 wt.%, or from 10 wppm to 0.005 wt.%. In terms of lower limits, the polyamide composition may comprise greater than 1 wppm stearate additive, e.g., greater than 5 wppm, greater 10 wppm, or greater than 25 wppm. In some embodiments, the polyamide composition comprises substantially no stearate additive, e.g., comprises no stearate additive.

In some cases, the polyamide composition comprises little or no antioxidant additives, e.g., phenolic antioxidants. As noted above, antioxidants are known polyamide stabilizers that are unnecessary in the polyamide compositions of the present disclosure. Preferably, the polyamide composition comprises no antioxidants. As a result, there is advantageously little need for antioxidant additives, and production efficiencies are achieved. For example, the polyamide composition may comprise less than 5 wt.% antioxidant additive, e.g., less than 4.5 wt.%, less than 4.0 wt.%, less than 3.5 wt.%, less than 3.0 wt.%, less than 2.5 wt.%, less than 2.0 wt.%, less than 1.5 wt.%, less than 1.0 wt.%, less than 0.5 wt.%, or less than 0.1 wt.%. In terms of ranges, the polyamide composition may comprise from 0.0001 wt.% to 5 wt.% antioxidants, e.g., from 0.001 wt.% to 4 wt.%, from 0.01 wt.% to 3 wt.%, from 0.01 wt.% to 2 wt.%, from 0.01 wt.% to 1 wt.%, from 0.01 wt.% to 0.5 wt.%, or from 0.05 wt.% to 0.5 wt.%. In terms of lower limits, the polyamide composition may comprise greater than 0.0001 wt.% antioxidant additive, e.g., greater than 0.001 wt.%, greater than 0.01 wt.%, greater than 0.05, or greater than 0.1 wt.%.

It has been discovered that when preparing the heat-stabilized polyamide compositions disclosed herein, the cerium-based heat stabilizer can beneficially be selected on the basis of that activation temperature. It has also been discovered that the cerium-based heat stabilizer's ability to stabilize may not fully activate at lower temperatures. In some cases. the cerium-based heat stabilizer may have an activation temperature greater than 180°C. e.g., greater than 183°C, greater than 185°C, greater than 187°C, greater than 190°C, greater than 192°C, greater than 195°C, greater than 197°C, greater than 200°C, greater than 202°C, greater than 205°C, greater than 207°C, greater than 210°C, greater than 212°C, or greater than 215°C. In terms of ranges, the cerium-based heat stabilizer may have an activation temperature ranging from 180°C to 230°C, e.g., from 180°C to 220°C, from 185°C to 230°C, from 185°C to 220°C, from 190°C to 220°C, from 190°C to 210°C, from 195°C to 205°C, or from 200°C to 205°C. In terms of upper limits, the cerium-based heat stabilizer may have an activation temperature less than 230°C. e.g., less than 220°C, less than 210°C, or less than 205°C. In preferred embodiments, the cerium-based heat stabilizer has an activation temperature of approximately 230°C.

The activation temperature of a polyamide heat stabilizer may be an "effective activation temperature." The effective activation temperature relates to the temperature at which the stabilization functionality of the additive becomes more active than the thermo-oxidative degradation of the polyamide composition. The effective activation temperature reflects a balance between the stabilization kinetics and the degradation kinetics.

**In** some cases, when a heat stabilization target is known, the cerium-based heat stabilizer, or the combination of cerium-based heat stabilizers, can be selected based on the heat stabilization target. For example, in some embodiments, the cerium-based heat stabilizer is preferably selected such that the cerium-based heat stabilizer has an activation temperature falling within the ranges and limits mentioned herein.

**In** some embodiments, the second heat stabilizer may have an activation temperature less than 200°C. e.g., less than 190°C, less than 180°C, less than 170°C, less than 160°C, less than 150°C, or less than 148°C. In terms of lower limits, the second heat stabilizer may have an activation temperature greater than 100°C. e.g., greater than 110°C, greater than 120°C, greater than 130°C, greater than 140°C, or greater than 142°C. In terms of ranges, the second heat stabilizer may have an activation temperature ranging from 100°C to 200°C, e.g., from 120°C to 160°C, from 110°C to 190°C, from 110°C to 180°C, from 120°C to 170°C, from 130°C to 160°C, from 140°C to 150°C, or from 142°C to 148°C. Effective activation temperatures may be within these ranges and limits as well.

In preferred embodiments, the second heat stabilizer is selected such that it has an activation temperature lower than the activation temperature of the cerium-based heat stabilizer. By utilizing a second heat stabilizer with a lower activation temperature than that of the cerium-based heat stabilizer, the resultant polyamide composition may show increased heat stability and/or heat stability over a broader range of temperatures. In some embodiments, the activation temperature of the cerium-based heat stabilizer, as measured in degrees centigrade, is greater than the activation temperature of the second heat stabilizer, e.g., the copper-based stabilizer, as measured in degrees centigrade, e.g., at least 10% greater, at least 12% greater, at least 15% greater, at least 17% greater, at least 20% greater, at least 25% greater, at least 30% greater, at least 40% greater, or at least 50% greater.

In some cases, the activation temperature of the cerium-based heat stabilizer, as measured in degrees centigrade, is greater than the activation temperature of the second heat stabilizer, e.g., the copper-based stabilizer, as measured in degrees centigrade, e.g., at least 10°C greater, at least 15°C greater, at least 20°C greater, at least 25°C greater, at least 35°C greater, or at least 50°C greater.

As noted above, some conventional stabilizer packages may rely on combinations of second heat stabilizers, e.g., stearates (such as calcium stearate or zinc stearate), hypophosphoric acids, and/or hypophosphates. It has been discovered that the use of the aforementioned cerium-based heat stabilizer and lower amounts, if any, of these compounds has been surprisingly found to improve the stabilization profile of the resultant polyamide composition. In some embodiments, the polyamide composition comprises less than 0.5 wt.% of hypophosphoric acid and/or a hypophosphate, e.g., less than 0.3 wt.%, less than 0.1 wt.%, less than 0.05 wt.%, or less than 0.01 wt.%. In terms of ranges, the polyamide composition may comprise from 1 wppm to 0.5 wt.% of hypophosphoric acid and/or a hypophosphate, e.g., from 1 wppm to 0.3 wt.%, from 1 wppm to 0.1 wt.%, from 5 wppm to 0.05 wt.%, or from 5 wppm to 0.01 wt.%. In a preferred embodiment, the polyamide composition comprises no hypophosphoric acid and/or a hypophosphate.

In some embodiments, the polyamide composition comprises less than 1.0 wt.% of cerium dioxide, e.g., less than 0.7 wt.%, less than 0.5 wt.%, less than 0.3 wt.%, less than 0.1 wt.%, less than 0.05 wt.%, or less than 0.01 wt.%. In terms of ranges, the polyamide composition may comprise from 1 wppm to 1 wt.% of cerium dioxide, e.g., from 1 wppm to 0.5 wt.%, from 1 wppm to 0.1 wt.%, from 5 wppm to 0.05 wt.%, or from 5 wppm to 0.01 wt.%. In a preferred embodiment, the polyamide composition comprises no cerium dioxide.

**In** a particular embodiment, the second heat stabilizer is a copper-based compound and the polyamide has an impact resilience of at least 50%.

**In** another particular embodiment, the cerium-based heat stabilizer is a cerium-based ligand, the second heat stabilizer is a copper-based heat stabilizer, the polyamide composition has a tensile strength of at least 80 MPa, when heat aged for 3000 hours at a temperature of at least 190°C and measured at 23°C, and optionally the cerium ratio ranges from 0.2 to 8.0.

In another particular embodiment, the cerium-based heat stabilizer is a cerium-based ligand; the second heat stabilizer is a copper-based heat stabilizer, the polyamide composition has a relative viscosity ranging from 3 to 80, and the polyamide composition has a tensile strength from 50 MPa to 150 MPa , when heat aged for 3000 hours at a temperature ranging from 190°C to 210°C and measured at 23°C.

In another particular embodiment, the cerium-based heat stabilizer is a cerium-based ligand, the second heat stabilizer is a copper-based heat stabilizer, the polyamide composition has a relative viscosity ranging from 5 to 75, and the polyamide composition has a tensile strength from 95 MPa to 200 MPA, when heat aged for 3000 hours at a temperature ranging from 190°C to 210°C and measured at 23°C.

Some embodiments of the heat-stabilized polyamide compositions comprise a filler, e.g., glass. In these cases, the filler may be present in an amount ranging from 0 wt.% to 60 wt.%, e.g., from 20 wt.% to 60 wt.%, from 25 wt.% to 55 wt.%, or from 30 wt.% to 50 wt.%. In terms of lower limits, the polyamide compositions may comprise at least 20 wt.% filler, e.g., at least 25 wt.%, at least 30 wt.%, at least 35 wt.%, or at least 40 wt.%. In terms of upper limits, the polyamide compositions may comprise less than 60 wt.% filler, e.g., less than 55 wt.%, less than 50 wt.%, less than 45 wt.%, or less than 40 wt.%. The ranges and limits for the other components are based on a "filled" composition. For a neat composition, the ranges and limits may need to be adjusted to compensate for the lack of filler. The material of the filler is not particularly limited and may be selected from polyamide fillers known in the art. By way of non-limiting example, the filler may comprise glass- and/or carbon fibers, particulate fillers, such as mineral fillers based on natural and/or synthetic layer silicates, talc, mica, silicate, quartz, titanium dioxide, wollastonite, kaolin, amorphous silicic acids, magnesium carbonate, magnesium hydroxide, chalk, lime, feldspar, barium sulphate, solid or hollow glass balls or ground glass, permanently magnetic or magnetisable metal compounds and/or alloys and/or combinations thereof, and also combinations thereof.

In other cases, the heat-stabilized polyamide compositions is a "neat" composition, e.g., the polyamide composition comprises little or no filler. For example the polyamide compositions may comprise less than 20 wt.% filler, e.g., less than 17 wt.%, less than 15 wt.%, less than 10 wt.%, or less than 5 wt.%. In terms of ranges, the polyamide compositions may comprise from 0.01 wt.% to 20 wt.% filler, e.g., from 0.1 wt.% to 15 wt.% or from 0.1 wt.% to 5 wt.%. In such cases, the amounts of other components may be adjusted accordingly based on the aforementioned component ranges and limits. It is contemplated that a person of ordinary skill in the art would be able to adjust the concentration of the other components of the polyamide composition in light of the inclusion or exclusion of a glass filler.

Both the filled and neat embodiments each demonstrate the surprising improved mechanical properties. For unfilled resins of polyamides, however, thermal stability is not typically measured by references to the tensile strength of the polyamide composition; rather, thermal stability is often measured using relative thermal index (RTI). RTI refers to the thermal classification of a material by comparing the performance of the material against the performance of a known or reference material. Often, RTI assesses the ability of the material to withstand exposure to high temperatures by measuring the ability of the material to maintain at least 50% of its tensile strength when exposed to various temperatures for set amounts of time. The non-glass-filled embodiments of the heat-stabilized polyamide compositions demonstrate improved RTI.

### Performance Characteristics

The aforementioned heat-stabilized polyamide compositions demonstrate surprising performance results. For example, the polyamide compositions demonstrate superior tensile strength over broad temperature ranges, even over known performance gaps, e.g., temperature gaps (for example from 190°C to 230°C). These performance parameters are exemplary and the examples support other performance parameters that are contemplated by the disclosure. For example, other performance characteristics taken at other heat age temperatures (in particular, over ranges in heat age temperatures, for example from 190°C to 230°C) and heat age durations are contemplated and may be utilized to characterize the disclosed polyamide compositions.

In some embodiments, the polyamide composition demonstrates a tensile strength of at least 75 MPa, e.g., at least 80 MPa, at least 90 MPa, at least 100 MPa, at least 110 MPa, at least 120 MPa, at least 130 MPa, or at least 140 MPa, when heat aged for 3000 hours at a temperature of at least 180°C, e.g., 180°C or 190°C, and measured at 23°C. In terms of ranges, the tensile strength may range from 80 MPa to 200 MPa, e.g., from 90 MPa to 180 MPa, from 100 MPa to 180 MPa, or from 120 MPa to 175 MPa.

In some embodiments, the polyamide composition demonstrates a tensile strength of at least 6.5 MPa, e.g., at least 50 MPa, at least 80 MPa, at least 90 MPa, at least 100 MPa, at least 105 MPa, or at least 110 MPa, when heat aged for 3000 hours at a temperature of at least 210°C, e.g., 210°C or 220°C, and measured at 23°C. In terms of ranges, the tensile strength may range from 6.5 MPa to 200 MPa, e.g., from 50 MPa to 200 MPa, from 80 MPa to 180 MPa, or from 100 MPa to 160 MPa.

In some embodiments, the polyamide composition demonstrates a tensile strength of at least 75 MPa, e.g., at least 80 MPa, at least 90 MPa, at least 100 MPa, at least 110 MPa, at least 120 MPa, at least 130 MPa, or at least 140 MPa, when heat aged for 3000 hours over an entire temperature range of from 190°C to 230°C, and measured at 23°C.

Such heat age performance over the 190°C to 230°C range (as shown throughout this section) illustrates the unexpected performance of the disclosed polyamide compositions, especially in the temperature gap. This is applicable to the performance characteristics as well, e.g., tensile retention or impact resilience. Other temperature ranges, e.g., from 190°C to 220°C or from 210°C to 230°C, are also supported by the examples and contemplated, but all of these specific performance characteristics are not specifically listed (in the interest of brevity and conciseness)

In some embodiments, the polyamide composition demonstrates a tensile strength retention of at least 38%, e.g., at least 40%, at least 42%, at least 43%, or at least 45%, when heat aged for 3000 hours at a temperature of at least 190°C, e.g., 180°C or 190°C, and measured at 23°C. In terms of ranges, the tensile strength retention may range from 38% to 80%, e.g., from 40% to 75%, from 42% to 75%.

In some embodiments, the polyamide composition demonstrates a tensile strength retention of at least 3%, e.g., at least 30%, at least 40%, at least 42%, at least 43%, at least 44%, or at least 50%, when heat aged for 3000 hours at a temperature of at least 210°C, e.g., 210°C or 220°C, and measured at 23°C. In terms of ranges, the tensile strength retention may range from 3% to 95%, e.g., from 30% to 80%, from 40% to 70%.

In some embodiments, the polyamide composition demonstrates a tensile strength retention of at least 38%, e.g., at least 40%, at least 42%, at least 43%, at least 44%, or at least 45%, when heat aged for 3000 hours over an entire temperature range of from 190°C to 230°C, and measured at 23°C.

Tensile strength is not the only mechanical property of polyamides that suffers from exposure to high temperatures. The damage to polyamides caused by heat manifests itself in a number of ways. It has been found that the heat-stabilized polyamide compositions also show improved resilience to other forms of damage. That is to say, the polyamide compositions exhibit other desirable mechanical properties after having been exposed to high temperatures.

In some embodiments, the polyamide composition demonstrates a tensile elongation of at least 0.78%, e.g., at least 0.80%, at least 0.85%, at least 0.90%, or at least 1.0%, when heat aged for 3000 hours at a temperature of at least 190°C, e.g., 180°C or 190°C, and measured at 23°C. In terms of ranges, the tensile elongation may range from 0.78% to 2.0%, e.g., from 0.80% to 1.75%, from 0.85% to 1.5%, or from 0.90% to 1.46%.

In some embodiments, the polyamide composition demonstrates a tensile elongation of at least 0.29%, e.g., at least 0.50%, at least 0.75%, at least 0.85%, at least 0.90%, or at least 1.0%, when heat aged for 3000 hours at a temperature of at least 210°C, e.g., 210°C or 220°C, and measured at 23°C. In terms of ranges, the tensile elongation may range from 0.29% to 2.0%, e.g., from 0.50% to 1.75%, from 0.75% to 1.65%, or from 0.9%0 to 1.6%.

In some embodiments, the polyamide composition demonstrates a tensile elongation of at least 0.78%, e.g., at least 0.80%, at least 0.85%, at least 0.90%, or at least 1.0%, when heat aged for 3000 hours over an entire temperature range of from 190°C to 230°C, and measured at 23°C.

In some embodiments, the polyamide composition demonstrates a tensile modulus of at least 10600 MPa, e.g,. at least 10900 MPa, at least 11000 MPa, or at least 11750 MPa, when heat aged for 3000 hours at a temperature of at least 190°C, e.g., 180°C or 190°C, and measured at 23°C. In terms of ranges, the tensile modulus may range from 10600 MPa to 14000 MPa, e.g., from 10900 MPa to 13000 MPa, from 11000 MPa to 12850 MPa, or from 11750 MPa to 12750 MPa.

In some embodiments, the polyamide composition demonstrates a tensile modulus of at least 2175 MPa, e.g., at least 7500 MPa, at least 11000 MPa, at least 11750 MPa, or at least 12000 MPa, when heat aged for 3000 hours at a temperature of at least 210°C, e.g., 210°C or 220°C,. In terms of ranges, the tensile modulus may range from 2175 MPa to 14000 MPa, e.g., from 7500 MPa to 13000 MPa, from 11000 MPa to 12850 MPa, or from 11750 MPa to 12850 MPa.

In some embodiments, the polyamide composition demonstrates a tensile modulus of at least 2175 MPa, e.g., at least 6800 MPa, at least 7500 MPa, at least 10600 MPa, at least 11000 MPa, at least 11750 MPa, or at least 12000 MPa, when heat aged for 3000 hours over an entire temperature range of from 190°C to 230°C, and measured at 23°C.

In some embodiments, the polyamide composition demonstrates an (unnotched) impact resilience of at least 12.2 kJ/m², e.g., at least 14.0 kJ/m², at least 15.0 kJ/m², at least 17.0 kJ/m², or at least 20.0 kJ/m², when heat aged for 3000 hours at a temperature of at least 190°C, e.g., 180°C or 190°C, and measured at 23°C. In terms of ranges, the impact resilience may range from 12.5 kJ/m² to 50.0 kJ/m², e.g., from 14.0 kJ/m² to 40.0 kJ/m², from 15.0 kJ/m² to 35.0 kJ/m², from 17.0 kJ/m² to 30.0 kJ/m², or from 20.0 kJ/m² to 30.0 kJ/m².

In some embodiments, the polyamide composition demonstrates an (unnothced) impact resilience of at least at least 0.9 kJ/m²,e.g., 2.7 kJ/m²,, at least 5.0 kJ/m², at least 10.0 kJ/m², at least 15.0 kJ/m², at least 20.0 kJ/m², or at least 25.0 kJ/m², when heat aged for 3000 hours at a temperature of at least 210°C, e.g., 210°C or 220°C, and measured at 23°C. In terms of ranges, the impact resilience may range from 0.9 kJ/m² to 50.0 kJ/m², e.g., from 2.7 kJ/m² to 40.0 kJ/m², from 5.0 kJ/m² to 40.0 kJ/m², from 10.0 kJ/m² to 35.0 kJ/m², or from 17.0 kJ/m² to 35.0 kJ/m².

In some embodiments, the polyamide composition demonstrates an (unnotched) impact resilience of at least 12.2 kJ/m², e.g., at least 12.9 kJ/m², at least 14.0 kJ/m², at least 15.0 kJ/m², at least 17.0 kJ/m², or at least 20.0 kJ/m², when heat aged for 3000 hours over an entire temperature range of from 190°C to 230°C, and measured at 23°C.

Some embodiments of the heat-stabilized polyamide composition exhibit an impact resilience of greater than 25 kJ/m², e.g., greater than 30 kJ/m², greater than 35 kJ/m², greater than 40 kJ/m², greater than 45 kJ/m², greater than 50 kJ/m², greater than 70 kJ/m², greater than 80 kJ/m², or greater than 100 kJ/m², when measured by ISO 179 (2018). In terms of ranges, the heat-stabilized polyamide composition exhibit an impact resilience ranging from 25 kJ/m² to 500 kJ/m², from 30 kJ/m² to 250 kJ/m², from 35 kJ/m² to 150 kJ/m², from 35 kJ/m² to 100 kJ/m², from 25 kJ/m² to 75 kJ/m², or from 35 kJ/m² to 750 kJ/m².

Generally, tensile strength, tensile elongation, and tensile modulus measurements may be conducted under ISO 527-1 (2018 or 2019), and heat aging measurements may be conducted under ISO 188 (2018 or 2019).

Tensile strength retention may be measured by measuring tensile strength before and after treatment and calculating a ratio of the measurements.

Impact resilience may be measured in accordance with ISO 179/1eU (2018 or (2019).

Furthermore, the heat stabilizer packages have been shown to retard the damage to the polyamides even when exposed to higher temperature. When tensile strength is measured at higher temperatures, the tensile strength of the heat-stabilized polyamide compositions remains surprisingly high. Typically, tensile strength of polyamide compositions is much lower when measured at higher temperatures. While that trend remains true of the heat-stabilized polyamide compositions disclosed herein, the actual tensile strength remains surprisingly high even when measured at temperatures. In some cases, the polyamide composition demonstrates a tensile strength of at least 25 MPa, e.g., at least 15 MPa, at least 25 MPa, at least 35 MPa, at least 40 MPa, at least 50 MPa, at least 60 MPa, or at least 80 MPa, when heat aged for 3000 hours at a temperature of at least 190°C and measured at 190°C. In terms of ranges, the tensile strength may range from 15 MPa to 100 MPa, e.g., from 25 MPa to 100 MPa, from 35 MPa to 90 MPa, from 40 MPa to 90 MPa, from 40 MPa to 75 MPa, or from 40 MPa to 65 MPa. Polyamide compositions that demonstrate such high tensile strength after having been exposed to temperatures such as these constitute a marked improvement over other methods of heat-stabilizing polyamides known in the art.

In one embodiment, the polyamide composition demonstrates a tensile strength of at least 1 MPa, e.g., at least 5 MPa, at least 10 MPa, at least 12 MPa, at least 15 MPa, at least 20 MPa, or at least 30 MPa, when heat aged for 3000 hours at a temperature of at least 230°C and measured at 23°C. In terms of ranges, the tensile strength may range from 1 MPa to 100 MPa, e.g., from 5 MPa to 100 MPa, from 5 MPa to 50 MPa, from 5 MPa to 40 MPa, or from 10 MPa to 30 MPa. Although these tensile strengths decrease, these values are still surprisingly higher than those of conventional polyamide compositions that employ conventional stabilizer packages.

In one embodiment, the polyamide composition demonstrates a tensile strength of at least 50 MPa, e.g., at least 55 MPa, at least 60 MPa, at least 70 MPa, at least 80 MPa, at least 100 MPa, at least 125 MPa, or at least 200 MPa when heat aged for 3000 hours at a temperature ranging from 190°C to 210°C and measured at 23°C. In terms of ranges, the tensile strength may range from 50 MPa to 150 MPa, e.g., from 60 MPa to 125 MPa, from 70 MPa to 100 MPa, from 75 MPa to 95 MPa, or from 80 MPa to 95 MPa.

In one embodiment, the polyamide composition demonstrates a tensile strength of at least 1 MPa, e.g., at least 5 MPa, at least 10 MPa, at least 12 MPa, at least 15 MPa, at least 20 MPa, or at least 30 MPa, when heat aged for 3000 hours at a temperature at least 190°C and measured at 190°C. In terms of ranges, the tensile strength may range from 1 MPa to 100 MPa, e.g., from 5 MPa to 100 MPa, from 5 MPa to 50 MPa, from 5 MPa to 40 MPa, or from 80 MPa to 90 MPa. Although these tensile strengths decrease, these values are still surprisingly higher than those of conventional polyamide compositions that employ conventional stabilizer packages.

### Polyamide

As noted above, the present disclosure relates to heat-stabilizing additives for polyamides. Many varieties of natural and artificial polyamides have already been utilized in various applications due to their high durability and strength. Common polyamides include nylons and aramids. For example, the polyamide may comprise PA-4T/4I; PA-4T/6I; PA-5T/5I; PA-6; PA-6,6; PA-6,6/6; PA-6,6/6T; PA-6,6/6T(35)/6(7); PA-6,6/6T(35)/6(5); PA-6T/6I; PA-6T/6I/6; PA-6T/6; PA-6T/6I/66; PA-6T/MPDMT (where MPDMT is polyamide based on a mixture of hexamethylene diamine and 2-methylpentamethylene diamine as the diamine component and terephthalic acid as the diacid component); PA-6T/66; PA-6T/610; PA-10T/612; PA-10T/106; PA-6T/612; PA-6T/10T; PA-6T/10I; PA-9T; PA-10T; PA-12T; PA-10T/10I; PA-10,12; PA-10T/12; PA-10T/11; PA-6T/9T; PA-6T/12T; PA-6T/10T/6I; PA-6T/6I/6; or PA-6T/61/12; or combinations thereof.

The heat-stabilized polyamide compositions may comprise a combination of polyamides. By combining various polyamides, the final composition may be able to incorporate the desirable properties, e.g., mechanical properties, of each constituent polyamides.

The heat-stabilized polyamide composition may comprise from 25 wt.% to 99 wt.% of the amide polymer (as a whole), based on the total weight of the heat-stabilized polyamide composition. In some cases, the heat-stabilized polyamide composition may comprise amide polymer in an amount from 25 wt.% to 99 wt.%, from 30 wt.% to 95 wt.%, from 30 wt.% to 85 wt.%, from 50 wt.% to 95 wt.%, from 50 wt.% to 90 wt.%, from 70 wt.% to 95 wt.%, from 70 wt.% to 90 wt.%, and from 80 wt.% to 95 wt.%., or from 80 wt.% to 90 wt.%. In terms of lower limits, the heat-stabilized polyamide composition may comprise amide polymer in an amount less than 99 wt.%, e.g., less than 95 wt.%, less than 90 wt.%, or less than 85 wt.%. In terms of lower limits, the heat-stabilized polyamide composition may comprise amide polymer in an amount greater than 25 wt.%, e.g. greater than 30 wt.%, greater than 50 wt.%, greater than 70 wt.%, greater than 80 wt.%, greater than 85 wt.%, or greater than 90 wt.%.

Without being bound by theory, the combination of polyamides could comprise any number of known polyamides. For example, in some embodiments, the polyamide comprises a combination of PA-6 with PA-6,6, and/or PA-6,6/6T. In these embodiments, the polyamide may comprise from 1 wt.% to 99 wt.% PA-6, from 1 wt.% to 99 wt.% PA-6,6, and/or from 1 wt.% to 99 wt.% PA-6,6/6T. In particular, the PA-6 may be present in an amount from 1 wt.% to 80 wt.%, from 5 wt.% to 70 wt.%, from 10 wt.% to 50 wt.%, from 10 wt.% to 30 wt.%, and from 10 wt.% to 20 wt.%. In terms of upper limits, the PA-6 may be present in an amount up to 99 wt.%, e.g., up to 90 wt.%, up to 80 wt.%, up to 70 wt.%, up to 50 wt.%, up to 30 wt.%, and up to 20 wt.%. The PA-6,6 and/or PA-6,6/6T may be present in an amount from 20 wt.% to 99 wt.%, from 30 wt.% to 85 wt.%, from 50 wt.% to 90 wt.%, from 70 wt.% to 90 wt.%, and from 80 wt.% to 90 wt.%. In terms lower limits, the PA-6,6 and/or PA-6,6/6T may be present in an amount greater than 1 wt.%, e.g., greater than 10 wt.%, greater than 20 wt.%, greater than 30 wt.%, greater than 50 wt.%, great than 70 wt.%, and greater than 80 wt.%. In some embodiments the polyamide comprises one or more of PA-6, PA-6,6, and PA-6,6/6T.

The heat-stabilized polyamide compositions may also comprise polyamides produced through the ring-opening polymerization or polycondensation, including the copolymerization and/or copolycondensation, of lactams. Without being bound by theory, these polyamides may include, for example, those produced from propriolactam, butyrolactam, valerolactam, and caprolactam. For example, in some embodiments, the polyamide is a polymer derived from the polymerization of caprolactam. In those embodiments, the caprolactam is preferably at least 2 wt.% of the polymer, e.g., at least 10 wt.%, at least 15 wt.%, at least 20 wt.%, and at least 25 wt.%. In terms of ranges, the polymer comprises from 2 wt.% to 50 wt.% caprolactam, e.g., from 10 wt.% to 50 wt.%, from 15 wt.% to 47 wt.%, from 20 wt.% to 47 wt.%, from 25 wt.% to 45 wt.%, or from 30 wt.% to 45 wt.%. In terms of upper limits, the polymer comprises less than 50 wt.% capropactam, e.g., less than 47 wt.%, less than 45 wt.%, less than 42 wt.%, less than 40 wt.%, less than 35 wt.%, or less than 30 wt.%.

In some embodiments, as noted herein, a low caprolactam content polyamide is utilized, e.g., a polyamide comprising less than 50 wt.% caprolactam, e.g., less than 49 wt.%, less than 48 wt.%, less than 47 wt.%, less than 46 wt.%, less than 45 wt.%, less than 44 wt.%, less than 42 wt.%, less than 40 wt.%, less than 37 wt.%, less than 35 wt.%, less than 33 wt.%, less than 30 wt.%, less than 28 wt.%, less than 25 wt.%, less than 23 wt.%, or less than 20 wt.%. In terms of ranges, the low caprolactam content polyamide may comprise from 5 wt.% to 50 wt.% caprolactam, e.g., from 10 wt.% to 49.9 wt.%, from 15 wt.% to 49.5 wt.%, from 20 wt.% to 49.5 wt.%, from 25 wt.% to 48 wt.%, from 30 wt.% to 48 wt.%, from 35 wt.% to 48 wt.%, from 37 wt.% to 47 wt.%, from 39 wt.% to 46 wt.%, from 40 wt.% to 45 wt.%, from 41 wt.% to 45 wt.%, from 41 wt.% to 44 wt.%, or from 41 wt.% to 43 wt.%. In terms of lower limits, the low caprolactam content polyamide may comprise greater than 2 wt.% caprolactam, e.g., greater than 5 wt.%, greater than 10 wt.%, greater than 15 wt.%, greater than 20 wt.%, greater than 25 wt.%, greater than 30 wt.%, greater than 35 wt.%, greater than 37 wt.%, greater than 39 wt.%, greater than 40 wt.%, or greater than 41 wt.%.

In some embodiments, a low melt temperature polyamide is utilized, e.g., a polyamide having a melt temperature below 210°C, e.g., below 208°C, below 205°C, below 203°C, below 200°C, below 198°C, below 195°C, below 193°C, below 190°C, below 188°C, below 185°C, below 183°C, below 180°C, below 178°C, or below 175°C.

In some embodiments, the low caprolactam content polyamide comprises PA-6,6/6; PA-6T/6; PA-6,6/6T/6; PA-6,6/6I/6; PA-6I/6; or 6T/6I/6, or combinations thereof. In some cases, the low caprolactam content polyamide comprises PA-6,6/6 and/or PA-6,6/6T/6. In some embodiments, the low caprolactam content polyamide comprises PA-6,6/6.

In some embodiments, the low melt temperature polyamide comprises PA-6,6/6; PA-6T/6; PA-6,6/6I/6; PA-6I/6; or 6T/6I/6, or combinations thereof. In some cases, the low caprolactam content polyamide comprises PA-6,6/6. In some cases, the melt temperature of the low melt temperature polyamide may be controlled by manipulating the monomer components.

In some cases, the polyamide includes particular (high) concentrations of low caprolactam content polyamide and/or low melt temperature polyamide. For example, the polyamide may comprise greater than 90 wt.% of low caprolactam content polyamide and/or low melt temperature polyamide, e.g., greater than 91 wt.%, greater than 92 wt.%, greater than 93 wt.%, greater than 94 wt.%, greater than 95 wt.%, greater than 96 wt.%, greater than 97 wt.%, greater than 98 wt.%, greater than 99 wt.%, or greater than 99.5 wt.%. In terms of ranges, the polyamide may comprise from 90 wt.% to 100 wt.% low caprolactam content polyamide and/or low melt temperature polyamide, e.g., from 90 wt.% to 99 wt.%, from 90 wt.% to 98 wt.%, from 90 wt % to 96 wt.%, from 91 wt.% to 99 wt.%, from 91 wt.% to 98 wt.%, from 91 wt.% to 97 wt.%, from 91 wt.% to 96 wt.%, from 92 wt.% to 98 wt.%, from 92 wt.% to 97 wt.%, or from 92 wt.% to 96 wt.%. In terms of upper limits, the polyamide may comprise less than 100 wt.% low caprolactam content polyamide and/or low melt temperature polyamide, e.g., less than 99 wt.%, less than 98 wt.%, less than 97 wt.%, less than 96 wt.%, less than 95 wt.%, less than 94 wt.%, less than 93 wt.%, less than 92 wt.%, or less than 91 wt.%.

In some cases, the polyamide includes particular (low) concentrations of other non-low caprolactam content and/or high melt temperature polyamides, e.g,. PA-6. For example, the polyamide may comprise less than 10 wt.% of non-low caprolactam content polyamide and/or low melt temperature polyamide, e.g., less than 9 wt.%, less than 8 wt.%, less than 7 wt.%, less than 6 wt.%, less than 5 wt.%, less than 4 wt.%, less than 3 wt.%, less than 2 wt.% or less than 1 wt.%. In terms of ranges, the polyamide may comprise from 0.5 wt.% to 10 wt.% other non-low caprolactam content and/or high melt temperature polyamides, e.g., from 1 wt.% to 9 wt.%, from 1 wt.% to 8 wt.%, from 2 wt % to 8 wt.%, from 3 wt.% to 8 wt.%, from 3 wt.% to 7 wt.%, from 4 wt.% to 9 wt.%, from 4 wt.% to 8 wt.%, from 5 wt.% to 9 wt.%, from 5 wt.% to 8 wt.%, or from 6 wt.% to 8 wt.%. In terms of lower limits, the polyamide may comprise greater than 0.5 wt.% of non-low caprolactam content polyamide and/or low melt temperature polyamide, e.g., greater than 1 wt.%, greater than 2 wt.%, greater than 3 wt.%, greater than 4 wt.%, greater than 5 wt.%, greater than 6 wt.%, greater than 7 wt.%, greater than 8 wt.%, or greater than 9 wt.%.

Furthermore, the heat-stabilized polyamide compositions may comprise the polyamides produced through the copolymerization of a lactam with a nylon, for example, the product of the copolymerization of a caprolactam with PA-6,6.

**In** addition to the compositional make-up of the polyamide composition, it has also been discovered that the relative viscosity of the amide polymer in combination with the stabilizer package has been found to have many surprising benefits, both in performance and processing. For example, if the relative viscosity of the amide polymer is within certain ranges and/or limits, production rates and tensile strength (and optionally impact resilience) are improved.

**In** the heat-stabilized polyamide compositions, the polyamide may have a relative viscosity ranging from 3 to 100, e.g. from 10 to 80, from 20 to 75, from 30 to 60, from 35 to 55, from 40 to 50, or from 42 to 48. In terms of lower limits, the relative viscosity of the polyamide may be greater than 3, e.g., greater than 10, greater than 20, greater than 30, greater than 35, greater than 36, greater than 40, or greater than 42. In terms of upper limits, the relative viscosity of the polyamide may be less than 100, e.g., less than 80, less than 75, less than 60, less than 55, less than 50, or less than 48. Relative viscosity may be determined via the formic acid method.

### Additional Components

Some embodiments of the heat-stabilized polyamide compositions further comprise a supplemental heat stabilizer (in addition to the cerium-based heat stabilizer and the second heat stabilizer. The addition of a supplemental heat stabilizer can synergistically improve the capability of the heat-stabilize polyamide compositions to maintain desirable mechanical properties after exposure to high temperatures. In particular, the additional of the supplemental heat stabilizer may result in a polyamide composition that has a higher tensile strength after having been exposed to high temperatures. In some embodiments, the supplemental heat stabilizer may comprise any heat stabilizer, or combinations thereof, known in the art. For example, the supplemental heat stabilizer may be selected from the group consisting of phenolics, amines, polyols, copper-based stabilizers, and combinations thereof.

### Process of Production

Processes of producing the heat-stabilized polyamide compositions are described hereinafter. A preferred method includes providing a polyamide, determining a desired heat stabilization target, selecting a cerium-based stabilizer based on the desired heat stabilization target, and adding the cerium-based stabilizer to the polyamide to form a heat-stabilized polyamide composition. For example, if a tensile strength of at least 75 MPa, when heat aged for 3000 hours at a temperature ranging from 180°C to 220°C or from 190°C to 230°C (and measured at 23°C) is desired, the cerium-based stabilizer having acetate and/or hydrate ligands, e.g., cerium acetate and/or cerium hydrate, may be utilized to achieve the desired performance in the specific heat age temperature range (the other heat age temperature ranges and limits discussed herein and other ligands discussed herein may be similarly employed in this manner). By doing so the heat stabilizer package with the selected cerium-based stabilizer and second heat can be employed to produce a polyamide composition that exhibits heat stability at the desired temperature.

The method can also include the further steps of selecting a second heat stabilizer based on the desired heat stabilization target and the cerium-based stabilizer. The cerium-based heat stabilizer can be selected on the basis of its activation temperature. Similarly, the second heat stabilizer can also be selected on the basis of the desired heat stabilization level and/or the selected cerium-based heat stabilizer. The resultant polyamide composition will have the beneficial performance characteristics discussed herein.

In preferred embodiments of this process, the cerium-based stabilizer is a cerium based ligand and the second heat stabilizer is a copper-based heat stabilizer. In these embodiments, the selection of the cerium-based ligand may further comprise the selection of a ligand component of the cerium-based ligand based on the desired heat stabilization level.

Preferably, the result of this process is a heat-stabilized polyamide composition that has a tensile strength of at least 75 MPa, e.g., at least 200 MPa, when heat aged for 3000 hours at a temperature of at least 190°C and measured at 23°C.

The process may comprise the steps of providing an amide polymer; adding to the polymer a cerium-based heat stabilizer and a second heat stabilizer, as discussed herein, to form an intermediate polyamide composition, heating the intermediate polyamide composition to a predetermined temperature, e.g., at least 180°C, and cooling the heated intermediate polyamide composition to form the heat-stabilized polyamide composition. Beneficially, the heating of the polyamide serves to activate the stabilizer package, which in turn heat stabilizes the intermediate polyamide composition. As a result, the (cooled) heat-stabilized polyamide composition will have improved performance characteristics, as discussed herein.

Some embodiments of the process include the intermediate steps of grinding the amide polymer and adding the cerium-based heat stabilizer to the ground amide polymer. The remaining components are then added to the resultant ground amide polymer and cerium-based heat stabilizer mixture. The inventors have discovered that this process advantageously results in a more uniform dispersion of the cerium-based heat stabilizer throughout the final heat-stabilized polyamide compositions.

### Embodiments

The following embodiments are contemplated. All combinations of features and embodiments are contemplated.

Embodiment 1: A heat-stabilized polyamide composition may comprise: from 25 wt.% to 90 wt.%% of an amide polymer, from 0.01 wt.% to 10 wt.% of a cerium-based heat stabilizer, a second heat stabilizer, from 0 wt.% to 60 wt.% of a filler, halide additive, and less than 0.3 wt.% of a stearate additive, wherein a weight ratio of halide additive to stearate additive is less than 45.0, and optionally wherein the polyamide composition has a tensile strength of at least 75 MPa, when heat aged for 3000 hours at a temperature of at least 180°C and measured at 23°C, or wherein the polyamide composition optionally has a tensile strength of at least 75 MPa, when heat aged for 3000 hours over a temperature range of from 190°C to 230°C, and measured at 23°C.

Embodiment 2: The polyamide composition may comprise less than 5 wt.% of an antioxidant additive.

Embodiment 3: The polyamide composition may comprise less than 0.5 wt.% of hypophosphoric acid and/or a hypophosphate.

Embodiment 4: The cerium-based heat stabilizer may be present in an amount greater than the second heat stabilizer.

Embodiment 5: The second heat stabilizer may be present in an amount ranging from 0.01 wt.% to 5 wt.%.

Embodiment 6: The weight ratio of the cerium-based heat stabilizer to the second heat stabilizer may range from 0.1 to 8.5.

Embodiment 7: The second heat stabilizer may comprise a copper-based compound.

Embodiment 8: The polyamide composition may comprise greater than 350 wppm copper-based compound.

Embodiment 9: The relative viscosity of the amide polymer may range from 3 to 100.

Embodiment 10: The weight ratio of halide additive to the stearate additive may be less than 10.

Embodiment 11: The cerium-based heat stabilizer may be a cerium ligand selected from the group consisting of acetates, hydrates, oxyhydrates, phosphates, bromides, chlorides, oxides, nitrides, borides, carbides, carbonates, ammonium nitrates, fluorides, nitrates, polyols, amines, phenolics, hydroxides, oxalates, sulfates, aluminates, and combinations thereof.

Embodiment 12: The cerium-based heat stabilizer may be a cerium ligand selected from the group consisting of cerium hydrates, cerium acetates, and combinations thereof.

Embodiment 13: The cerium-based heat stabilizer may be cerium acetate.

Embodiment 14: The cerium-based heat stabilizer may have an activation temperature ranging from 180°C to 230°C.

Embodiment 15: The polyamide composition may comprise less than 1 wt.% cerium dioxide.

Embodiment 16: The polyamide composition may comprise no cerium dioxide.

Embodiment 17: The polyamide composition may have a tensile strength of at least 200 MPa, when heat aged for 3000 hours at a temperature of at least 190 °C and measured at 23°C.

Embodiment 18: The polyamide composition may have a tensile strength of at least 25 MPa, when heat aged for 3000 hours at a temperature of at least 190°C and measured at 190°C.

Embodiment 19: The polyamide composition may have a tensile strength ranging from 75 MPa to 175 MPa, when heat aged for 3000 hours at a temperature ranging from 190°C to 210°C and measured at 23 °C.

Embodiment 20: The polyamide composition may have a tensile strength ranging from 5 MPa to 100 MPa, when heat aged for 3000 hours at a temperature of at least 230°C and measured at 23°C.

Embodiment 21: The polyamide composition may have an impact resilience of at least 25 kJ/m², as measured by ISO 179 (2018).

Embodiment 22: The polyamide composition may have an impact resilience of at least 75 kJ/m², as measured by ISO 179 (2018).

Embodiment 23: The second heat stabilizer may be a copper-based compound and wherein the polyamide may have an impact resilience of at least 50%.

Embodiment 24: The activation temperature of the cerium-based heat stabilizer, as measured in degrees centigrade, may be at least 10% greater than the activation temperature of the second heat stabilizer, as measured in degrees centigrade.

Embodiment 25: The cerium-based heat stabilizer may be a cerium-based ligand; wherein the second heat stabilizer may be a copper-based heat stabilizer, and wherein the polyamide composition may have a tensile strength of at least 200 MPa, when heat aged for 3000 hours at a temperature of at least 190 °C and measured at 23°C.

Embodiment 26: The cerium-based heat stabilizer may be a cerium-based ligand; wherein the second heat stabilizer may be a copper-based heat stabilizer; and wherein the polyamide composition may have a relative viscosity ranging from 3 to 80; and wherein the polyamide composition may have a tensile strength from 50 MPa to 150 MPa , when heat aged for 3000 hours at a temperature ranging from 190°C to 210°C and measured at 23°C.

Embodiment 27: The cerium-based heat stabilizer may be a cerium-based ligand; wherein the second heat stabilizer may be a copper-based heat stabilizer; and wherein the polyamide composition may have a relative viscosity ranging from 5 to 75; and wherein the polyamide composition may have a tensile strength from 95 MPa to 200 MPA, when heat aged for 3000 hours at a temperature ranging from 190°C to 210°C and measured at 23°C.

Embodiment 28: The second heat stabilizer may be selected from the group consisting phenolics, amines, polyols, and combinations thereof.

Embodiment 29: the amide polymer may comprise: from 0 wt.% to 99 wt.% PA-6,6; from 0 wt.% to 99 wt.% PA-6,6/6T; and from 0 wt.% to 30 wt.% PA-6.

Embodiment 30: The amide polymer may comprise a first amide polymer and a second amide polymer.

Embodiment 31: The amide polymer may have a caprolactam content of at least 10 wt.%.

Embodiment 32: The polyamide composition may comprise a filler, preferably present in an amount ranging from 20 wt.% to 60 wt.%..

Embodiment 33: The polyamide composition may comprise less than 20 wt.% of the filler, preferably less than 1 wt.%.

Embodiment 34: the low caprolactam content polyamide may comprise PA-6,6/6; PA-6T/6; PA-6,6/6T/6; PA-6,6/6I/6; PA-6I/6; or 6T/6I/6; or combinations thereof.

Embodiment 35: The low caprolactam content polyamide may comprise less than 50 wt.% caprolactam.

Embodiment 36: The polyamide composition may comprise cerium oxyhydrate in an amount ranging from 10 ppm to 9000 ppm

Embodiment 37: The weight ratio of cerium oxide and/or cerium oxyhydrate to second heat stabilizer may range from 5.0 to 50.0.

### Examples

Examples 1 - 13 and Comparative Examples A - D were prepared by combining components as shown in Table 1 and compounding in a twin screw extruder. Polymers were melted, additives were added to the melt, and the resultant mixture was extruded and pelletized. Percentages are expressed as weight percentages.

The second heat stabilizer package comprised a blend of CuI (7.67%), KBr(67.33%), Zinc Stearate 16.67%), and ethylene bis(stearamide) (8.33%).

| Table 1: Example and Comparative Example Compositions | | | | |
|---|---|---|---|---|
| | Comp. Ex. A | Comp. Ex. B | Comp. Ex. C | Comp. Ex. D |
| Component | | | | |
| PA-66 | 51.90% | 63.91% | 51.00 % | 51.00% |
| PA-66/6T | | | | |
| Nigrosine | 0.45% | 0.45% | 0.45% | 0.45% |
| Glass fiber | 35.00% | 35.30% | 35.00% | 35.00% |
| PA-6 | 12.00% | | 12.00% | 12.00% |
| Carbon black | 0.05% | 0.04% | 0.05% | 0.05% |
| Second heat stabilizer pkg. | 0.60% | 0.30% | | |
| Cerium hydrate master | | | | |
| Cerium acetate | | | | |
| Cerium hydrate | | | 0.50% | |
| Cerium oxyhydrate | | | | 0.50% |
| Ground PA-66 | | | 1.00% | 1.00% |
| PA-66/6 | | | | |
| PA-66/6 (23% 6) | | | | |
| PA-66/6T(35)/6(7) | | | | |
| PA-66/6T(35)/6(5) | | | | |
| PA-6/66 | | | | |
| Cerium phosphate | | | | |
| PA-10,12 | | | | |
| Halide: stearate weight ratio | 0.25 | 0.25 | --- | --- |

| Table 1 (cont'd): Example and Comparative Example Compositions | | | | |
|---|---|---|---|---|
| | Ex. 1 | Ex. 2 | Ex. 3 | Ex. 4 |
| Component | | | | |
| PA-66 | 50.90% | 51.20% | | 50.40% |
| PA-66/6T | | | 50.90% | |
| Nigrosine | 0.45% | 0.45% | 0.45% | 0.45% |
| Glass fiber | 35.00% | 35.00% | 35.00% | 35.00% |
| PA-6 | 12.00% | 12.00% | 12.00% | 12.00% |
| Carbon black | 0.05% | 0.05% | 0.05% | 0.05% |
| Second heat stabilizer pkg. | 0.60% | 0.60% | 0.60% | 0.60% |
| Cerium hydrate master | 1.00% | | 1.00% | |
| Cerium acetate | | 0.70% | | |
| Cerium hydrate | | | | |
| Cerium oxyhydrate | | | | 0.50% |
| Ground PA-66 | | | | 1.00% |
| PA-66/6 | | | | |
| PA-66/6 (23% 6) | | | | |
| PA-66/6T(35)/6(7) | | | | |
| PA-66/6T(35)/6(5) | | | | |
| PA-6/66 | | | | |
| Cerium phosphate | | | | |
| PA-10,12 | | | | |
| Halide: stearate weight ratio | 0.25 | 0.25 | 0.25 | 0.25 |

| Table 1 (cont'd): Example and Comparative Example Compositions | | | | |
|---|---|---|---|---|
| | Ex. 5 | Ex. 6 | Ex. 7 | Ex. 8 |
| Component | | | | |
| PA-66 | 40.20% | 38.20% | | |
| PA-66/6T | | | 41.65% | |
| Nigrosine | 0.45% | 0.45% | 0.45% | 0.45% |
| Glass fiber | 35.00% | 35.00% | 35.00% | 35.00% |
| PA-6 | 5.00% | 5.00% | 5.00% | 5.00% |
| Carbon black | 0.05% | 0.05% | 0.05% | 0.05% |
| Second heat stabilizer pkg. | 0.60% | 0.60% | 0.60% | 0.60% |
| Cerium hydrate master | 1.70% | 1.70% | 1.70% | 1.70% |
| Cerium acetate | | | | |
| Cerium hydrate | | | | |
| Cerium oxyhydrate | | | | |
| Ground PA-66 | | | | |
| PA-66/6 | 17.00% | | 15.55% | |
| PA-66/6 (23% 6) | | 19.00% | | |
| PA-66/6T(35)/6(7) | | | | 56.05% |
| PA-66/6T(35)/6(5) | | | | |
| PA-6/66 | | | | |
| Cerium phosphate | | | | |
| PA-10,12 | | | | |
| Halide: stearate weight ratio | 0.25 | 0.25 | 0.25 | 0.25 |

| Table 1 (cont'd): Example and Comparative Example Compositions | | | | | |
|---|---|---|---|---|---|
| | Ex. 9 | Ex. 10 | Ex. 11 | Ex. 12 | Ex. 13 |
| Component | | | | | |
| PA-66 | | 50.90% | 50.60% | | 50.90% |
| PA-66/6T | | | | 50.60% | |
| Nigrosine | 0.45% | 0.45% | 0.45% | 0.45% | 0.45% |
| Glass fiber | 35.00% | 35.00% | 35.00% | 35.00% | 35.00% |
| PA-6 | 5.00% | | 12.00% | 12.00% | |
| Carbon black | 0.05% | 0.05% | 0.05% | 0.05% | 0.05% |
| Second heat stabilizer pkg. | 0.60% | 0.60% | 0.60% | 0.60% | 0.60% |
| Cerium hydrate master | 1.70% | 1.00% | | | 1.00% |
| Cerium acetate | | | | | |
| Cerium hydrate | | | | | |
| Cerium oxyhydrate | | | | | |
| Ground PA-66 | | | 1.00% | 1.00% | |
| PA-66/6 | | | | | |
| PA-66/6 (23% 6) | | | | | |
| PA-66/6T(35)/6(7) | | | | | |
| PA-66/6T(35)/6(5) | 57.20% | | | | |
| PA-6/66 | | 12.00% | | | |
| Cerium phosphate | | | 0.30% | 0.30% | |
| PA-10,12 | | | | | 12.00% |
| Halide: stearate weight ratio | 0.25 | 0.25 | 0.25 | 0.25 | 0.25 |

The samples were heat aged and tested for tensile strength. The results are summarized in Tables 2a - 2e.

| Table 2a: Tensile Strength at 170°C, MPa | | | |
|---|---|---|---|
| Age Time | 1000 | 2000 | 3000 |
| Comp. A | 178.3 | 160.7 | 133.4 |
| Comp. B | 170.0 | 144.7 | 126.0 |
| Comp. C | 185.3 | 162.4 | 123.2 |
| Comp. D | 185.2 | 154.2 | 114.1 |
| Range | 170 - 185 | 145 - 162 | 114 - 133 |
| Ex. 1 | 176.5 | 164.2 | 157.2 |
| Ex. 2 | 156.8 | 143.3 | 134.5 |
| Ex. 3 | 187.5 | 175.4 | 173.7 |
| Ex. 4 | 188.2 | 178.2 | 154.4 |
| Ex. 5 | | | |
| Ex. 6 | | | |
| Ex. 7 | | | |
| Ex. 8 | | | |
| Ex. 9 | | | |
| Ex. 10 | 176.3 | 156.0 | 142.4 |
| Ex. 11 | 157.6 | 146.1 | 130.9 |
| Ex. 12 | 183.8 | 167.2 | 158.4 |
| Ex. 13 | 147.8 | 144.6 | 126.3 |
| Range | 148-188 | 143-178 | 126-174 |

| Table 2b: Tensile Strength at 190°C, MPa | | | | | |
|---|---|---|---|---|---|
| Age Time | 1000 | 1500 | 2000 | 2500 | 3000 |
| Comp. A | 153.5 | 139.0 | 138.1 | | 76.8 |
| Comp. B | 147.8 | 114.1 | 92.1 | | 41.6 |
| Comp. C | 160.9 | 120.9 | 85.9 | | 36.0 |
| Comp. D | 159.9 | 109.1 | 75.7 | | 27.2 |
| Range | 148-161 | 109-139 | 76-138 | | 27-77 |
| Ex. 1 | 162.2 | 162.1 | 148.5 | 118.0 | 101.1 |
| Ex. 2 | 149.9 | 153.0 | 142.0 | 132.8 | 126.1 |
| Ex. 3 | 171.9 | 172.0 | 169.2 | 157.6 | 145.1 |
| Ex. 4 | 162.6 | 138.1 | 138.1 | | 96.6 |
| Ex. 5 | 159.8 | 157.5 | 128.2 | 123.2 | 99.0 |
| Ex. 6 | 152.5 | 147.1 | 126.7 | 109.6 | 94.5 |
| Ex. 7 | 142.4 | 140.6 | 131.3 | 133.4 | 111.5 |
| Ex. 8 | 136.7 | 141.0 | 125.4 | 110.6 | 86.9 |
| Ex. 9 | 135.5 | 141.2 | 132.4 | 119.5 | 93.5 |
| Ex. 10 | 153.1 | 146.5 | 122.9 | 97.5 | 84.8 |
| Ex. 11 | 136.5 | 128.0 | 122.8 | 86.1 | 51.3 |
| Ex. 12 | 166.2 | 158.9 | 161.9 | 146.0 | 148.7 |
| Ex. 13 | 124.4 | 120.7 | 123.1 | 119.6 | 102.3 |
| Range | 124-172 | 124-172 | 123-169 | 86-158 | 51-149 |

| Table 2c: Tensile Strength at 210°C, MPa | | | | | | |
|---|---|---|---|---|---|---|
| Age Time | 500 | 1000 | 1500 | 2000 | 2500 | 3000 |
| Comp. A | 174.0 | 126.4 | 76.4 | 25.8 | | 1.4 |
| Comp. B | 156.0 | 67.7 | 10.5 | 1.2 | | 1.2 |
| Comp. C | 180.4 | 122.3 | 90.2 | 64.6 | | 6.4 |
| Comp. D | 174.4 | 120.2 | 81.2 | 51.8 | | 4.5 |
| Range | 156-180 | 68-126 | 11-90 | 1-65 | | 1-6 |
| Ex. 1 | 176.2 | 158.2 | 141.4 | 125.1 | 98.5 | 81.6 |
| Ex. 2 | 155.2 | 130.4 | 130.4 | 123.1 | 111.8 | 93.2 |
| Ex. 3 | 197.3 | 182.4 | 173.1 | 152.2 | 150.0 | 156.5 |
| Ex. 4 | 175.0 | 159.3 | 139.6 | 130.8 | | 95.3 |
| Ex. 5 | 167.9 | 147.0 | 134.8 | 124.6 | 122.0 | 124.8 |
| Ex. 6 | 157.3 | 149.6 | 122.4 | 111.2 | 106.5 | 98.2 |
| Ex. 7 | 154.7 | 141.9 | 125.2 | 120.7 | 131.2 | 133.1 |
| Ex. 8 | 153.9 | 138.2 | 125.1 | 113.8 | 117.8 | 121.5 |
| Ex. 9 | 155.2 | 146.2 | 125.1 | 113.0 | 111.6 | 120.7 |
| Ex. 10 | 177.6 | 139.9 | 125.7 | 111.4 | 103.4 | 106.6 |
| Ex. 11 | 160.6 | 132.5 | 74.6 | 23.8 | 2.8 | 2.8 |
| Ex. 12 | 199.7 | 178.3 | 180.3 | 168.3 | 137.1 | 128.2 |
| Ex. 13 | 153.7 | 114.2 | 90.7 | 92.5 | 88.5 | 84.1 |
| Range | 154-200 | 114-182 | 75-180 | 24-168 | 3-150 | 3-156 |

| Table 2d: Tensile Strength at 220°C, MPa | | | | | | |
|---|---|---|---|---|---|---|
| Age Time | 500 | 1000 | 1500 | 2000 | 2500 | 3000 |
| Comp. A | | | | | | |
| Comp. B | | | | | | |
| Comp. C | | | | | | |
| Comp. D | | | | | | |
| Range | | | | | | |
| Ex. 1 | | | | | | |
| Ex. 2 | | | | | | |
| Ex. 3 | | | | | | |
| Ex. 4 | | | | | | |
| Ex. 5 | 144.9 | 167.0 | 184.6 | 171.3 | 166.0 | 181.6 |
| Ex. 6 | 131.6 | 144.7 | 156.8 | 158.0 | 164.7 | 148.0 |
| Ex. 7 | 135.6 | 148.9 | 167.1 | 176.8 | 180.7 | 178.1 |
| Ex. 8 | 148.2 | 142.8 | 150.5 | 170.6 | | 171.2 |
| Ex. 9 | 151.1 | 149.1 | 149.1 | 170.4 | | 179.7 |
| Ex. 10 | | | | | | |
| Ex. 11 | | | | | | |
| Ex. 12 | | | | | | |
| Ex. 13 | | | | | | |
| Range | 132-151 | 143-167 | 149-185 | 158-177 | 165-181 | 148-182 |

| Table 2e: Tensile Strength at 230°C, MPa | | | | | | |
|---|---|---|---|---|---|---|
| Age Time | 500 | 1000 | 1500 | 2000 | 2500 | 3000 |
| Comp. A | 198.5 | 163.3 | 194.2 | 206.9 | | 209.1 |
| Comp. B | 83.4 | 8.5 | 0.0 | 1.0 | | 1.2 |
| Comp. C | 200.4 | 174.4 | 153.6 | 130.6 | | 79.4 |
| Comp. D | 204.2 | 148.6 | 148.4 | 121.5 | | 59.7 |
| Range | 83-204 | 9-174 | 0-194 | 1-207 | | 1-209 |
| Ex. 1 | 164.2 | 182.3 | 180.2 | 171.6 | 171.1 | 166.3 |
| Ex. 2 | 151.2 | 174.2 | 162.6 | 153.8 | 149.0 | 147.1 |
| Ex. 3 | 168.5 | 201.0 | 203.9 | 196.5 | 192.3 | 194.8 |
| Ex. 4 | 179.4 | 196.2 | 198.0 | 192.9 | -- | 186.0 |
| Ex. 5 | 164.9 | 174.2 | 167.7 | 160.4 | 158.4 | 157.3 |
| Ex. 6 | 151.8 | 173.0 | 164.1 | 152.2 | 165.1 | 166.2 |
| Ex. 7 | 164.6 | 184.1 | 178.0 | 166.5 | 165.1 | 167.1 |
| Ex. 8 | 162.8 | 185.9 | 178.3 | 178.4 | 178.6 | 173.4 |
| Ex. 9 | 156.1 | 186.3 | 183.5 | 184.3 | 179.0 | 181.5 |
| Ex. 10 | 165.6 | 170.2 | 180.6 | 178.2 | 161.9 | 167.1 |
| Ex. 11 | 193.2 | 188.7 | 189.8 | 194.5 | 169.0 | 192.0 |
| Ex. 12 | 205.5 | 206.4 | 206.9 | 210.8 | 202.0 | 215.4 |
| Ex. 13 | 158.8 | 156.1 | 157.4 | 157.5 | 153.5 | 150.3 |
| Range | 151-205 | 156-206 | 157-207 | 152-211 | 149-202 | 147-215 |

The samples were heat aged and tested for tensile strength retention. The results are summarized in Tables 3a - 3e.

| Table 3a: Tensile Strength Retention at 170°C | | | |
|---|---|---|---|
| Age Time | 1000 | 2000 | 3000 |
| Comp. A | 87.98% | 79.31% | 65.83% |
| Comp. B | 85.26% | 72.57% | 63.18% |
| Comp. C | 95.98% | 84.14% | 63.82% |
| Comp. D | 91.10% | 75.88% | 56.15% |
| Range | 85-96 | 73-84 | 56-66 |
| Ex. 1 | 89.53% | 83.28% | 79.74% |
| Ex. 2 | 84.86% | 77.57% | 72.81% |
| Ex. 3 | 92.71% | 86.70% | 85.86% |
| Ex. 4 | 89.65% | 84.91% | 73.58% |
| Ex. 5 | 0.00% | 0.00% | 0.00% |
| Ex. 6 | 0.00% | 0.00% | 0.00% |
| Ex. 7 | 0.00% | 0.00% | 0.00% |
| Ex. 8 | 0.00% | 0.00% | 0.00% |
| Ex. 9 | 0.00% | 0.00% | 0.00% |
| Ex. 10 | 90.99% | 80.52% | 73.51% |
| Ex. 11 | 82.13% | 76.15% | 68.21% |
| Ex. 12 | 90.90% | 82.70% | 78.33% |
| Ex. 13 | 75.35% | 73.73% | 64.39% |
| Range | 75-93 | 74-89 | 64-86 |

| Table 3b: Tensile Strength Retention at 190°C | | | | | |
|---|---|---|---|---|---|
| Age Time | 1000 | 1500 | 2000 | 2500 | 3000 |
| Comp. A | 75.73% | 68.58% | 68.15% | 0.00% | 37.92% |
| Comp. B | 74.13% | 57.22% | 46.17% | 0.00% | 20.89% |
| Comp. C | 83.33% | 62.64% | 44.52% | 0.00% | 18.65% |
| Comp. D | 78.65% | 53.69% | 37.24% | 0.00% | 13.36% |
| Range | 74-83 | 54-69 | 37-68 | -- | 13-38 |
| Ex. 1 | 82.27% | 82.22% | 75.33% | 59.87% | 51.29% |
| Ex. 2 | 81.13% | 82.81% | 76.85% | 71.87% | 68.24% |
| Ex. 3 | 84.99% | 85.06% | 83.63% | 77.92% | 71.72% |
| Ex. 4 | 77.49% | 65.79% | 65.79% | 0.00% | 46.04% |
| Ex. 5 | 78.18% | 77.06% | 62.73% | 60.25% | 48.41% |
| Ex. 6 | 78.02% | 75.27% | 64.84% | 56.06% | 48.37% |
| Ex. 7 | 74.31% | 73.39% | 68.49% | 69.60% | 58.19% |
| Ex. 8 | 70.82% | 73.04% | 64.97% | 57.30% | 44.99% |
| Ex. 9 | 71.60% | 74.60% | 69.96% | 63.16% | 49.39% |
| Ex. 10 | 79.00% | 75.63% | 63.41% | 50.32% | 43.79% |
| Ex. 11 | 71.15% | 66.69% | 64.00% | 44.86% | 26.74% |
| Ex. 12 | 82.19% | 78.60% | 80.06% | 72.23% | 73.54% |
| Ex. 13 | 63.40% | 61.52% | 62.78% | 61.00% | 52.15% |
| Range | 63-85 | 62-85 | 63-84 | 45-78 | 27-74 |

| Table 3c: Tensile Strength Retention at 210°C | | | | | | |
|---|---|---|---|---|---|---|
| Age Time | 500 | 1000 | 1500 | 2000 | 2500 | 3000 |
| Comp. A | 85.86% | 62.39% | 37.71% | 12.73% | 0.00% | 0.67% |
| Comp. B | 78.23% | 33.94% | 5.28% | 0.59% | 0.00% | 0.60% |
| Comp. C | 93.43% | 63.38% | 46.71% | 33.48% | 0.00% | 3.30% |
| Comp. D | 85.82% | 59.12% | 39.92% | 25.50% | 0.00% | 2.21% |
| Range | 78-93 | 34-63 | 5-47 | 1-33 | | 1-3 |
| Ex. 1 | 89.35% | 80.26% | 71.73% | 63.44% | 49.97% | 41.40% |
| Ex. 2 | 83.99% | 70.57% | 70.57% | 66.62% | 60.48% | 50.45% |
| Ex. 3 | 97.53% | 90.19% | 85.56% | 75.23% | 74.18% | 77.37% |
| Ex. 4 | 83.40% | 75.89% | 66.51% | 62.33% | 0.00% | 45.42% |
| Ex. 5 | 82.15% | 71.91% | 65.97% | 60.95% | 59.68% | 61.07% |
| Ex. 6 | 80.47% | 76.57% | 62.61% | 56.89% | 54.48% | 50.24% |
| Ex. 7 | 80.70% | 74.06% | 65.35% | 62.99% | 68.48% | 69.45% |
| Ex. 8 | 79.72% | 71.61% | 64.79% | 58.97% | 61.04% | 62.92% |
| Ex. 9 | 82.02% | 77.24% | 66.09% | 59.71% | 58.98% | 63.77% |
| Ex. 10 | 91.67% | 72.22% | 64.86% | 57.48% | 53.36% | 55.03% |
| Ex. 11 | 83.70% | 69.05% | 38.88% | 12.41% | 1.44% | 1.47% |
| Ex. 12 | 98.78% | 88.18% | 89.18% | 83.21% | 67.79% | 63.41% |
| Ex. 13 | 78.34% | 58.24% | 46.26% | 47.17% | 45.12% | 42.89% |
| Range | 78-99 | 58-90 | 39-89 | 12-83 | 1-74 | 1-77 |

| Table 3d: Tensile Strength Retention at 220°C | | | | | | |
|---|---|---|---|---|---|---|
| Age Time | 500 | 1000 | 1500 | 2000 | 2500 | 3000 |
| Comp. A | 0.00% | 0.00% | 0.00% | 0.00% | 0.00% | 0.00% |
| Comp. B | 0.00% | 0.00% | 0.00% | 0.00% | 0.00% | 0.00% |
| Comp. C | 0.00% | 0.00% | 0.00% | 0.00% | 0.00% | 0.00% |
| Comp. D | 0.00% | 0.00% | 0.00% | 0.00% | 0.00% | 0.00% |
| Range | -- | -- | -- | -- | -- | -- |
| Ex. 1 | 0.00% | 0.00% | 0.00% | 0.00% | 0.00% | 0.00% |
| Ex. 2 | 0.00% | 0.00% | 0.00% | 0.00% | 0.00% | 0.00% |
| Ex. 3 | 0.00% | 0.00% | 0.00% | 0.00% | 0.00% | 0.00% |
| Ex. 4 | 0.00% | 0.00% | 0.00% | 0.00% | 0.00% | 0.00% |
| Ex. 5 | 70.87% | 81.68% | 90.33% | 83.80% | 81.22% | 88.86% |
| Ex. 6 | 67.33% | 74.05% | 80.22% | 80.85% | 84.27% | 75.75% |
| Ex. 7 | 70.77% | 77.70% | 87.22% | 92.26% | 94.30% | 92.95% |
| Ex. 8 | 76.75% | 73.98% | 77.94% | 88.35% | 0.00% | 88.67% |
| Ex. 9 | 79.82% | 78.78% | 78.77% | 90.01% | 0.00% | 94.92% |
| Ex. 10 | 0.00% | 0.00% | 0.00% | 0.00% | 0.00% | 0.00% |
| Ex. 11 | 0.00% | 0.00% | 0.00% | 0.00% | 0.00% | 0.00% |
| Ex. 12 | 0.00% | 0.00% | 0.00% | 0.00% | 0.00% | 0.00% |
| Ex. 13 | 0.00% | 0.00% | 0.00% | 0.00% | 0.00% | 0.00% |
| Range | 67-80 | 74-82 | 78-90 | 81-92 | 81-94 | 76-95 |

| Table 3e: Tensile Strength Retention at 230°C | | | | | | |
|---|---|---|---|---|---|---|
| Age Time | 500 | 1000 | 1500 | 2000 | 2500 | 3000 |
| Comp. A | 97.94% | 80.57% | 95.84% | 102.11% | 0.00% | 103.20% |
| Comp. B | 41.81% | 4.27% | 0.00% | 0.51% | 0.00% | 0.58% |
| Comp. C | 103.79% | 90.32% | 79.56% | 67.65% | 0.00% | 41.12% |
| Comp. D | 100.47% | 73.09% | 73.01% | 59.80% | 0.00% | 29.39% |
| Range | 42-104 | 4-90 | 73-96 | 1-102 | -- | 1-103 |
| Ex. 1 | 83.30% | 92.45% | 91.42% | 87.04% | 86.80% | 84.34% |
| Ex. 2 | 81.81% | 94.29% | 87.97% | 83.21% | 80.64% | 79.62% |
| Ex. 3 | 83.32% | 99.36% | 100.80% | 97.13% | 95.07% | 96.32% |
| Ex. 4 | 85.49% | 93.50% | 94.32% | 91.93% | 0.00% | 88.63% |
| Ex. 5 | 80.66% | 85.23% | 82.04% | 78.49% | 77.49% | 76.94% |
| Ex. 6 | 77.66% | 88.52% | 83.97% | 77.88% | 84.49% | 85.04% |
| Ex. 7 | 85.90% | 96.08% | 92.90% | 86.90% | 86.16% | 87.21% |
| Ex. 8 | 84.33% | 96.31% | 92.37% | 92.44% | 92.51% | 89.83% |
| Ex. 9 | 82.45% | 98.40% | 96.94% | 97.38% | 94.58% | 95.88% |
| Ex. 10 | 85.47% | 87.82% | 93.23% | 91.99% | 83.56% | 86.22% |
| Ex. 11 | 100.68% | 98.33% | 98.93% | 101.34% | 88.05% | 100.05% |
| Ex. 12 | 101.61% | 102.08% | 102.32% | 104.23% | 99.89% | 106.52% |
| Ex. 13 | 80.97% | 79.59% | 80.24% | 80.32% | 78.27% | 76.62% |
| Range | 78-102 | 80-102 | 80-102 | 78-104 | 77-100 | 77-107 |

The samples were heat aged and tested for tensile elongation. The results are summarized in Tables 4a - 4e.

| Table 4a: Tensile Elongation at 170°C, % | | | |
|---|---|---|---|
| Age Time | 1000 | 2000 | 3000 |
| Comp. A | 2.0496 | 1.6958 | 1.3276 |
| Comp. B | 2.0338 | 1.4938 | 1.3402 |
| Comp. C | 2.1584 | 1.7298 | 1.2296 |
| Comp. D | 2.15 | 1.6216 | 1.1548 |
| Range | 2.0-2.2 | 1.5-1.7 | 1.2-1.3 |
| Ex. 1 | 2.0488 | 1.7286 | 1.608 |
| Ex. 2 | 1.7688 | 1.4604 | 1.3734 |
| Ex. 3 | 2.1548 | 1.89025 | 1.8476 |
| Ex. 4 | 2.1722 | 1.906 | 1.555 |
| Ex. 5 | | | |
| Ex. 6 | | | |
| Ex. 7 | | | |
| Ex. 8 | | | |
| Ex. 9 | | | |
| Ex. 10 | 2.0468 | 1.6488 | 1.2896 |
| Ex. 11 | 1.816 | 1.6312 | 1.3868 |
| Ex. 12 | 2.1068 | 1.7702 | 1.6138 |
| Ex. 13 | 1.5858 | 1.5158 | 1.25 |
| Range | 1.6-2.2 | 1.5-1.9 | 1.3-1.8 |

| Table 4b: Tensile Elongation at 190°C, % | | | | | |
|---|---|---|---|---|---|
| Age Time | 1000 | 1500 | 2000 | 2500 | 3000 |
| Comp. A | 1.6132 | 1.366 | 1.3464 | | 0.7708 |
| Comp. B | 1.5094 | 1.19025 | 0.9906 | | 0.6488 |
| Comp. C | 1.6376 | 1.2136 | 0.9282 | | 0.5424 |
| Comp. D | 1.6714 | 1.1346 | 0.9354 | | 0.4628 |
| Range | 1.5-1.7 | 1.1-1.4 | 0.9-1.3 | | 0.5-0.8 |
| Ex. 1 | 1.6366 | 1.6472 | 1.507 | 1.804 | 1.1802 |
| Ex. 2 | 1.5328 | 1.6072 | 1.454 | 1.5412 | 1.313 |
| Ex. 3 | 1.7624 | 1.7678 | 1.7256 | 1.668 | 1.4568 |
| Ex. 4 | 1.5948 | 1.425 | 1.425 | | 1.1328 |
| Ex. 5 | 1.5168 | 1.4908 | 1.1494 | 1.236 | 1.030975 |
| Ex. 6 | 1.5218 | 1.4732 | 1.1784 | 1.0994 | 0.992928 |
| Ex. 7 | 1.5212 | 1.4634 | 1.3256 | 1.4052 | 1.0588 |
| Ex. 8 | 1.3934 | 1.4264 | 1.2082 | 1.119 | 0.7683 |
| Ex. 9 | 1.3434 | 1.4358 | 1.2938 | 1.2044 | 0.86082 |
| Ex. 10 | 1.5932 | 1.4986 | 1.171 | 0.9536 | 0.8202 |
| Ex. 11 | 1.3682 | 1.2618 | 1.228 | 0.8216 | 0.69175 |
| Ex. 12 | 1.6802 | 1.5658 | 1.6632 | 1.3842 | 1.4786 |
| Ex. 13 | 1.1824 | 1.1974 | 1.24 | 1.222 | 1.0112 |
| Range | 1.6-2.1 | 1.2-1.8 | 1.1-1.7 | 0.8-1.8 | 0.7-1.5 |

| Table 4c: Tensile Elongation at 210°C, % | | | | | | |
|---|---|---|---|---|---|---|
| Age Time | 500 | 1000 | 1500 | 2000 | 2500 | 3000 |
| Comp. A | 1.7708 | 1.193 | 0.77625 | 0.339 | | 0.231 |
| Comp. B | 1.6324 | 0.9766 | 0.6576 | 0.214333333 | | 0.074333 |
| Comp. C | 1.949 | 1.4812 | 1.3524 | 1.2696 | | 0.2708 |
| Comp. D | 1.849 | 1.5506 | 1.448 | 1.002 | | 0.17475 |
| Range | 1.6-1.9 | 1.0-1.6 | 0.7-1.4 | 0.2-1.3 | -- | 0.1-0.3 |
| Ex. 1 | 1.8628 | 1.5986 | 1.393 | 1.2262 | 1.088586 | 0.9392 |
| Ex. 2 | 1.57336 | 1.273 | 1.3288 | 1.2112 | 1.0132 | 0.8748 |
| Ex. 3 | 2.2458 | 1.9592 | 1.8126 | 1.5088 | 1.4322 | 1.5486 |
| Ex. 4 | 1.8428 | 1.5434 | 1.3194 | 1.2424 | | 0.8954 |
| Ex. 5 | 1.569 | 1.3704 | 1.2636 | 1.1318 | 1.160366 | 1.215 |
| Ex. 6 | 1.5004 | 1.498 | 1.1312 | 1.01418 | 1.063116 | 0.942288 |
| Ex. 7 | 1.6278 | 1.5174 | 1.2932 | 1.2658 | 1.4486 | 1.3024 |
| Ex. 8 | 1.6134 | 1.4498 | 1.2746 | 1.1336 | 1.2132 | 1.162 |
| Ex. 9 | 1.6208 | 1.5132 | 1.2296 | 1.1036 | 1.116 | 1.131 |
| Ex. 10 | 1.9174 | 1.457 | 1.3242 | 1.1166 | 1.021 | 0.9814 |
| Ex. 11 | 1.702 | 1.3194 | 0.723 | 0.2756 | | 0.793 |
| Ex. 12 | 2.3162 | 1.8844 | 1.9434 | 1.7552 | 1.2522 | 1.2334 |
| Ex. 13 | 1.676 | 1.1304 | 0.9808 | 1.2526 | 1.3412 | 1.4784 |
| Range | 1.5-2.3 | 1.1-2.0 | 0.7-1.9 | 0.3-1.8 | 1.0-1.4 | 0.8-1.5 |

| Table 4d: Tensile Elongation at 220°C, % | | | | | | |
|---|---|---|---|---|---|---|
| Age Time | 500 | 1000 | 1500 | 2000 | 2500 | 3000 |
| Comp. A | | | | | | |
| Comp. B | | | | | | |
| Comp. C | | | | | | |
| Comp. D | | | | | | |
| Range | | | | | | |
| Ex. 1 | | | | | | |
| Ex. 2 | | | | | | |
| Ex. 3 | | | | | | |
| Ex. 4 | | | | | | |
| Ex. 5 | 1.2606 | 1.5712 | 2.0752 | 1.6906 | 1.7266 | 1.9586 |
| Ex. 6 | 1.2154 | 1.3842 | 1.963 | 1.5998 | 1.8246 | 1.544 |
| Ex. 7 | 1.2692 | 1.5416 | 1.9256 | 2.0694 | 2.2454 | 1.938 |
| Ex. 8 | 1.5354 | 1.4062 | 1.4476 | 1.8494 | -- | 1.9182 |
| Ex. 9 | 1.5362 | 1.6692 | 1.4228 | 1.7984 | -- | 2.1008 |
| Ex. 10 | | | | | | |
| Ex. 11 | | | | | | |
| Ex. 12 | | | | | | |
| Ex. 13 | | | | | | |
| Range | 1.2-1.5 | 1.4-1.7 | 1.4-2.1 | 1.6-2.1 | 1.7-2.2 | 1.5-2.1 |

| Table 4e: Tensile Elongation at 230°C, % | | | | | | |
|---|---|---|---|---|---|---|
| Age Time | 500 | 1000 | 1500 | 2000 | 2500 | 3000 |
| Comp. A | 2.1466 | 1.685 | 2.1742 | 2.344 | | 2.4398 |
| Comp. B | 1.091 | 0.793667 | 0 | 0.13075 | | 0.075907 |
| Comp. C | 2.2706 | 1.8632 | 1.9042 | 1.6504 | | 1.7505 |
| Comp. D | 2.3886 | 1.9016 | 1.9952 | 1.7436 | | 1.3556 |
| Range | 1.1-2.4 | 0.8-1.9 | 1.9-2.2 | 0.1-2.3 | - | 0.1-2.4 |
| Ex. 1 | 1.68 | 2.1772 | 2.0986 | 1.926 | 1.8824 | 1.8004 |
| Ex. 2 | 1.6038 | 2.0152 | 1.7642 | 1.5846 | 1.5282 | 1.5022 |
| Ex. 3 | 1.7174 | 2.3138 | 2.3416 | 2.1284 | 2.0754 | 2.137 |
| Ex. 4 | 1.796 | 2.1856 | 2.0964 | 2.023 | | 1.923 |
| Ex. 5 | 1.545 | 1.8598 | 1.717 | 1.4966 | 1.6175 | 1.5072 |
| Ex. 6 | 1.3984 | 1.8602 | 1.77 | 1.5204 | 1.6808 | 1.8244 |
| Ex. 7 | 1.7658 | 2.15 | 2.0128 | 1.8342 | 1.9398 | 1.681 |
| Ex. 8 | 1.724 | 2.1248 | 1.847 | 1.8392 | 2.014 | 1.771 |
| Ex. 9 | 1.5956 | 2.1906 | 2.0028 | 1.9938 | 2.0312 | 1.8578 |
| Ex. 10 | 1.75 | 1.8282 | 1.963 | 1.9158 | 1.7516 | 1.6982 |
| Ex. 11 | 2.4625 | 2.2688 | 2.2344 | 2.519667 | 1.987667 | 2.406333 |
| Ex. 12 | 2.6084 | 2.3326 | 2.0536 | 2.55375 | 2.3264 | 2.8295 |
| Ex. 13 | 1.805 | 2.4212 | 2.2292 | 2.1516 | 2.064 | 2.0616 |
| Range | 1.4-2.6 | 1.8-2.4 | 1.7-2.3 | 1.5-2.0 | 1.5-2.3 | 1.5-2.8 |

The samples were heat aged and tested for tensile modulus. The results are summarized in Tables 5a - 5e.

| Table 5a: Tensile Modulus at 170°C, MPa | | | |
|---|---|---|---|
| Age Time | 1000 | 2000 | 3000 |
| Comp. A | 11228 | 11568 | 11696 |
| Comp. B | 11088 | 11610 | 11490 |
| Comp. C | 12014 | 11302 | 11906 |
| Comp. D | 11748 | 11338 | 11926 |
| Range | 11088-12014 | 11302-11610 | 11490-11926 |
| Ex. 1 | 11472 | 12354 | 11658 |
| Ex. 2 | 10310 | 11740 | 11324 |
| Ex. 3 | 11358 | 11900 | 11490 |
| Ex. 4 | 11842 | 12254 | 11592 |
| Ex. 5 | | | |
| Ex. 6 | | | |
| Ex. 7 | | | |
| Ex. 8 | | | |
| Ex. 9 | | | |
| Ex. 10 | 11172 | 11261 | 12690 |
| Ex. 11 | 11050 | 11158 | 11484 |
| Ex. 12 | 11604 | 11478 | 11560 |
| Ex. 13 | 11714 | 11836 | 11796 |
| Range | 10310-11842 | 11158-12354 | 11324-12690 |

| Table 5b: Tensile Modulus at 190°C, MPa | | | | | |
|---|---|---|---|---|---|
| Age Time | 1000 | 1500 | 2000 | 2500 | 3000 |
| Comp. A | 11532 | 12150 | 11594 | | 10566.2 |
| Comp. B | 11436 | 11087.5 | 10296 | | 7173 |
| Comp. C | 12184 | 11350 | 11106 | | 7592 |
| Comp. D | 11614 | 11498 | 10581 | | 6792.4 |
| Range | 11436-12184 | 11088-12150 | 10296-11594 | -- | 6792-10566 |
| Ex. 1 | 12258 | 11970 | 12194 | 10658.8 | 11106 |
| Ex. 2 | 11640 | 11776 | 11814 | 9994.2 | 11136 |
| Ex. 3 | 11564 | 11794 | 11910 | 12352 | 11650 |
| Ex. 4 | 12492 | 12216 | 12216 | | 11098 |
| Ex. 5 | 12688 | 12580 | 13058 | 10637.6 | 11587.5 |
| Ex. 6 | 12050 | 11140 | 12404 | 11190 | 11430 |
| Ex. 7 | 10928 | 11468 | 11678 | 11084.8 | 11956 |
| Ex. 8 | 11836 | 11140 | 12074 | 10738 | 12722 |
| Ex. 9 | 11798 | 10910 | 12206 | 11162 | 12292 |
| Ex. 10 | 11364 | 11344 | 11708 | 11602 | 11359.8 |
| Ex. 11 | 11424 | 11582 | 11418 | 11662 | 9976.75 |
| Ex. 12 | 11748 | 11526 | 10972 | 12290 | 12028 |
| Ex. 13 | 12024 | 10854 | 10744 | 10850 | 10922 |
| Range | 10928-12688 | 10854-12580 | 10744-13058 | 9994-12352 | 9977-12722 |

| Table 5c: Tensile Modulus at 210°C, MPa | | | | | | |
|---|---|---|---|---|---|---|
| Age Time | 500 | 1000 | 1500 | 2000 | 2500 | 3000 |
| Comp. A | 11868 | 11778 | 10226.25 | 7446.333333 | | 0 |
| Comp. B | 11554 | 7013.8 | 2357.8 | 83.69 | | 0 |
| Comp. C | 12460 | 10922 | 8707.4 | 6345 | | 2172.5 |
| Comp. D | 12300 | 10148.6 | 7275.4 | 5588.6 | | 0 |
| Range | 11554-12460 | 7013-11778 | 2358-10226 | 84-7446 | -- | 2172 |
| Ex. 1 | 12726 | 11862 | 11960 | 12218 | 11533.6 | 9750.2 |
| Ex. 2 | 12178 | 12028 | 12082 | 12322 | 10058 | 11874 |
| Ex. 3 | 11800 | 11438 | 11860 | 12188 | 12532 | 12200 |
| Ex. 4 | 12172 | 12260 | 12332 | 12246 | | 11010 |
| Ex. 5 | 14164 | 13182 | 14040 | 13580 | 10800.6 | 12466 |
| Ex. 6 | 13590 | 12272 | 13140 | 12710 | 11206.8 | 11478 |
| Ex. 7 | 12792 | 11762 | 12040 | 12184 | 11622 | 12680 |
| Ex. 8 | 12026 | 11484 | 11476 | 11878 | 11244 | 12492 |
| Ex. 9 | 12304 | 11870 | 12168 | 12274 | 11238 | 12850 |
| Ex. 10 | 11114 | 11170 | 11206 | 11512 | 11590 | 12386 |
| Ex. 11 | 11646 | 11612 | 11046 | 8203.75 | | |
| Ex. 12 | 11684 | 11644 | 11518 | 11606 | 12430 | 11834 |
| Ex. 13 | 11166 | 11618 | 10124 | 8993 | 8245.6 | 7923.2 |
| Range | 11114-14164 | 11170-13182 | 10124-14040 | 8204-13580 | 8246-12532 | 7923-12850 |

| Table 5d: Tensile Modulus at 220°C, MPa | | | | | | |
|---|---|---|---|---|---|---|
| Age Time | 500 | 1000 | 1500 | 2000 | 2500 | 3000 |
| Comp. A | | | | | | |
| Comp. B | | | | | | |
| Comp. C | | | | | | |
| Comp. D | | | | | | |
| Range | | | | | | |
| Ex. 1 | | | | | | |
| Ex. 2 | | | | | | |
| Ex. 3 | | | | | | |
| Ex. 4 | | | | | | |
| Ex. 5 | 13832 | 13894 | 12274 | 14418 | 12590 | 12756 |
| Ex. 6 | 13322 | 12920 | 9414.5 | 13880 | 12748 | 11554 |
| Ex. 7 | 14160 | 12370 | 11840 | 12884 | 11532 | 12902 |
| Ex. 8 | 10820 | 12660 | 13278 | 12164 | -- | 11312 |
| Ex. 9 | 11395.8 | 9639 | 13262 | 12720 | -- | 11074 |
| Ex. 10 | | | | | | |
| Ex. 11 | | | | | | |
| Ex. 12 | | | | | | |
| Ex. 13 | | | | | | |
| Range | 10820-14160 | 9639-13894 | 9414-13278 | 12164-14418 | 11532-12748 | 11074-12902 |

| Table 5e: Tensile Modulus at 230°C, MPa | | | | | | |
|---|---|---|---|---|---|---|
| Age Time | 500 | 1000 | 1500 | 2000 | 2500 | 3000 |
| Comp. A | 12226 | 12258 | 11320 | 12286 | | 11734 |
| Comp. B | 8344.2 | 2032.75 | 0 | 218 | | 0 |
| Comp. C | 12724 | 11091.4 | 10478 | 9847.2 | | 5535.25 |
| Comp. D | 12810 | 10804.6 | 9665.6 | 9449.6 | | 5678.4 |
| Range | 8344-12810 | 2033-12258 | 9666-13260 | 218-12286 | -- | 55535-11734 |
| Ex. 1 | 12124 | 12152 | 12054 | 12372 | 12456 | 11886 |
| Ex. 2 | 11930 | 10748 | 11838 | 12232 | 12038 | 11988 |
| Ex. 3 | 11852 | 11292 | 11610 | 12178 | 12116 | 11782 |
| Ex. 4 | 13762 | 12250 | 12798 | 12168 | | 11604 |
| Ex. 5 | 14842 | 12448 | 10873.4 | 14032 | 11986 | 12928 |
| Ex. 6 | 14050 | 12076 | 11604 | 12904 | 11852 | 12354 |
| Ex. 7 | 13920 | 11916 | 12440 | 12626 | 11970 | 12922 |
| Ex. 8 | 12420 | 11370 | 13260 | 13060 | 11422 | 12848 |
| Ex. 9 | 12682 | 10530 | 12340 | 12710 | 11784 | 13004 |
| Ex. 10 | 11002 | 11750 | 11564 | 11864 | 11954 | 12600 |
| Ex. 11 | 12052 | 11870 | 11206 | 11853.33 | 12603.33 | 12086.67 |
| Ex. 12 | 11984 | 11994 | 11736 | 12354 | 12642 | 12050 |
| Ex. 13 | 11006 | 10764 | 9881.8 | 10944.2 | 10200.6 | 10732 |
| Range | 11002-14842 | 10530-12448 | 9882-13260 | 10944-14032 | 10201-12642 | 10732-13004 |

The samples were heat aged and tested for impact resilience. The results are summarized in Tables 6a - 6e.

| Table 6a: Impact Resilience at 170°C, kJ/m² | | | |
|---|---|---|---|
| Age Time | 1000 | 2000 | 3000 |
| Comp. A | 35.9 | 32.3 | 23.7 |
| Comp. B | 35.5 | 29.8 | 19.9 |
| Comp. C | 35.2 | 29.7 | 16.5 |
| Comp. D | 37.5 | 26.4 | 17.7 |
| Range | 35.2-37.5 | 26.4-32.3 | 16.5-23.7 |
| Ex. 1 | 42.7 | 36.3 | 28.6 |
| Ex. 2 | 35.7 | 29.8 | 24.8 |
| Ex. 3 | 44.3 | 34.5 | |
| Ex. 4 | 42.7 | 34.5 | 27.6 |
| Ex. 5 | | | |
| Ex. 6 | | | |
| Ex. 7 | | | |
| Ex. 8 | | | |
| Ex. 9 | | | |
| Ex. 10 | 39.2 | 30.8 | 25.2 |
| Ex. 11 | 35.3 | 30.7 | 22.8 |
| Ex. 12 | 38.7 | 33.8 | 28.1 |
| Ex. 13 | 34.4 | 30.5 | 19.9 |
| Range | 34.4-44.3 | 29.8-36.3 | 19.9-28.6 |

| Table 6b: Impact Resilience at 190°C, kJ/m² | | | | | |
|---|---|---|---|---|---|
| Age Time | 1000 | 1500 | 2000 | 2500 | 3000 |
| Comp. A | 27.1 | 31.2 | 27.7 | | 12.1 |
| Comp. B | 28.3 | 19.5 | 15.9 | | 8.6 |
| Comp. C | 29.8 | 16.5 | 13.0 | | 5.5 |
| Comp. D | 29.1 | 15.5 | 12.7 | | 4.4 |
| Range | 27.1-29.8 | 15.5-31.2 | 12.7-27.7 | | 4.4-12.1 |
| Ex. 1 | 31.1 | 29.6 | 26.0 | 19.7 | 17.0 |
| Ex. 2 | 35.4 | 34.7 | 28.5 | 27.1 | 25.1 |
| Ex. 3 | 37.7 | 36.5 | 33.0 | 30.2 | 27.4 |
| Ex. 4 | 31.1 | 19.6 | 19.6 | | 16.3 |
| Ex. 5 | 37.3 | 33.9 | 27.1 | 20.2 | 15.5 |
| Ex. 6 | 34.2 | 29.8 | 23.2 | 23.9 | 15.3 |
| Ex. 7 | 30.1 | 27.7 | 27.9 | 28.8 | 22.8 |
| Ex. 8 | 27.8 | 26.9 | 28.4 | 21.8 | 12.6 |
| Ex. 9 | 33.0 | 24.6 | 29.2 | 23.9 | 17.7 |
| Ex. 10 | 29.0 | 30.6 | 21.4 | 14.9 | 12.6 |
| Ex. 11 | 24.4 | 26.9 | 23.5 | 16.8 | 11.1 |
| Ex. 12 | 32.1 | 34.9 | 32.0 | 32.4 | 29.0 |
| Ex. 13 | 25.8 | 27.7 | 26.9 | 25.1 | 21.0 |
| Range | 24.4-37.7 | 19.6-36.5 | 19.6-33.0 | 14.9-32.4 | 11.1-29.0 |

| Table 6c: Impact Resilience at 210°C, kJ/m² | | | | | | |
|---|---|---|---|---|---|---|
| Age Time | 500 | 1000 | 1500 | 2000 | 2500 | 3000 |
| Comp. A | 32.2 | 22.9 | 10.9 | 6.3 | | 0.5 |
| Comp. B | 30.0 | 10.9 | 2.6 | 0.7 | | 0.5 |
| Comp. C | 35.3 | 21.7 | 15.1 | 13.0 | | 2.6 |
| Comp. D | 32.9 | 20.4 | 17.5 | 12.6 | | 2.2 |
| Range | 30.0-35.3 | 10.9-22.9 | 2.6-17.5 | 0.7-13.0 | -- | 0.5-2.6 |
| Ex. 1 | 34.0 | 34.2 | 28.3 | 22.6 | 16.5 | 13.0 |
| Ex. 2 | 26.8 | 19.9 | 22.3 | 21.7 | 22.1 | 20.6 |
| Ex. 3 | 38.7 | 43.5 | 35.2 | 34.9 | 33.1 | 34.8 |
| Ex. 4 | 39.5 | 32.5 | 36.2 | 28.9 | | 16.2 |
| Ex. 5 | 35.6 | 35.0 | 24.0 | 24.8 | 24.8 | 25.6 |
| Ex. 6 | 38.2 | 36.9 | 24.7 | 23.7 | 18.9 | 19.0 |
| Ex. 7 | 37.0 | 34.7 | 26.5 | 28.2 | 31.7 | 33.4 |
| Ex. 8 | 35.2 | 32.6 | 25.0 | 20.7 | 29.2 | 25.9 |
| Ex. 9 | 32.6 | 38.4 | 27.3 | 21.3 | 26.4 | 22.5 |
| Ex. 10 | 36.8 | 29.5 | 22.6 | 20.3 | 17.2 | 17.0 |
| Ex. 11 | 30.0 | 27.6 | 11.0 | 5.4 | 1.2 | 0.9 |
| Ex. 12 | 37.8 | 40.8 | 36.9 | 33.9 | 30.2 | 23.0 |
| Ex. 13 | 32.2 | 21.8 | 14.5 | 15.6 | 18.3 | 15.4 |
| Range | 26.8-39.5 | 19.9-43.5 | 11.0-36.9 | 5.4-34.9 | 1.2-33.1 | 0.9-34.8 |

| Table 6d: Impact Resilience at 220°C, kJ/m² | | | | | | |
|---|---|---|---|---|---|---|
| Age Time | 500 | 1000 | 1500 | 2000 | 2500 | 3000 |
| Comp. A | | | | | | |
| Comp. B | | | | | | |
| Comp. C | | | | | | |
| Comp. D | | | | | | |
| Range | | | | | | |
| Ex. 1 | | | | | | |
| Ex. 2 | | | | | | |
| Ex. 3 | | | | | | |
| Ex. 4 | | | | | | |
| Ex. 5 | 32.6 | 35.1 | 105.2 | 47.3 | 44.8 | 55.2 |
| Ex. 6 | 31.4 | 30.8 | 29.4 | 38.5 | 40.3 | 50.1 |
| Ex. 7 | 27.6 | -- | 44.5 | 70.4 | 55.9 | 52.5 |
| Ex. 8 | 30.0 | 30.6 | 32.7 | 37.0 | -- | 45.9 |
| Ex. 9 | 31.5 | 32.9 | 37.6 | 52.6 | -- | 52.6 |
| Ex. 10 | | | | | | |
| Ex. 11 | | | | | | |
| Ex. 12 | | | | | | |
| Ex. 13 | | | | | | |
| Range | 27.6-32.6 | 30.6-35.1 | 29.4-105.2 | 37.0-70.4 | 40.3-55.9 | 45.9-55.2 |

| Table 6e: Impact Resilience at 230°C, kJ/m² | | | | | | |
|---|---|---|---|---|---|---|
| Age Time | 500 | 1000 | 1500 | 2000 | 2500 | 3000 |
| Comp. A | 43.4 | 37.5 | 30.0 | 34.8 | | 12.8 |
| Comp. B | 17.0 | 3.0 | 4.0 | 0.7 | | 0.6 |
| Comp. C | 52.5 | 44.1 | 36.9 | 32.3 | | 17.8 |
| Comp. D | 54.6 | 43.1 | 36.5 | 31.6 | | 16.0 |
| Range | 17.0-54.6 | 3.0-44.1 | 4.0-36.9 | 0.7-34.8 | -- | 0.6-17.8 |
| Ex. 1 | 30.9 | 39.0 | 53.7 | 47.5 | 44.0 | 40.0 |
| Ex. 2 | 30.7 | 43.5 | 44.9 | 44.0 | 36.9 | 40.3 |
| Ex. 3 | 34.1 | 49.3 | 58.7 | 54.6 | 55.4 | 54.8 |
| Ex. 4 | 38.2 | 48.9 | 53.4 | 47.9 | | 45.6 |
| Ex. 5 | 41.4 | 56.8 | 51.8 | 44.3 | 45.8 | 44.9 |
| Ex. 6 | 34.6 | 55.3 | 49.1 | - | 43.0 | 41.7 |
| Ex. 7 | 54.4 | - | 51.0 | 50.5 | 50.7 | 45.9 |
| Ex. 8 | 33.4 | 51.3 | 56.9 | 53.3 | 52.6 | 49.2 |
| Ex. 9 | 39.6 | 31.5 | 58.2 | 55.6 | 53.7 | 52.5 |
| Ex. 10 | 29.7 | 39.6 | 58.1 | 52.2 | 50.6 | 45.3 |
| Ex. 11 | 40.9 | 28.8 | 15.6 | 2.2 | 2.2 | 2.1 |
| Ex. 12 | 49.2 | 50.0 | 51.3 | 51.6 | 55.2 | 57.5 |
| Ex. 13 | 30.0 | 48.6 | 50.2 | 45.3 | 43.4 | 34.3 |
| Range | 29.7-54.4 | 3.0-56.8 | 15.6-58.7 | 0.7-55.6 | 2.2-55.4 | 2.1-57.5 |

As shown in the Tables, Examples 1 - 13 generally demonstrated unexpected, synergistic results in for all of the measured performance characteristics - tensile strength, tensile strength retention, tensile elongation, tensile modulus, and impact resilience.

Importantly, the disclosed polyamide compositions show significant improvements iover the (entire) temperature range of 190°C - 230°C (the "temperature gap"). Also, the improvements in performance are even more significant as the heat age time is greater than 1000 hours, e.g. greater than 2000 hours or greater than 2500 hours. The temperature gap and these extended heat age times are important and significant because they represent conditions under which polyamide compositions are typically employed, e.g. automotive under-the-hood applications.

The average values and ranges for the working Examples are higher than the values for the respective Comparative Examples, especially in the temperature gap and at higher heat age times. For example, for tensile strength measured at 190°C and 3000 hours of heat aging, the range for tensile strength range for the working Examples was 51 - 149 MPa, while the range for the Comparative Examples was significantly less, 27 - 77 MPa. The comparison is even more stark at 210°C and 3000 hours of heat aging. The range for tensile strength range for the working Examples was 82 - 156 MPa (if Example 11 is discarded), while the range for the Comparative Examples was an order of magnitude less, 1 - 6 MPa. Again, this demonstrates the improvements in performance in the temperature gap and at higher heat age times.

As another example, for impact resistance measured at 190°C and 3000 hours of heat aging, the range for the working Examples was 11.1 - 29.0 kJ/m², while the range for the Comparative Examples was significantly less, 4.4 - 12.1 kJ/m². The comparison is even more stark at 210°C and 3000 hours of heat aging. The range for impact resistance for the working Examples was 13.0 - 34.8 kJ/m² (if Example 11 is discarded), while the range for the Comparative Examples was 0.5 - 2.6 kJ/m² MPa.

Also, the polyamide composition demonstrates a tensile strength of at least 80 MPa (if Example 11 is discarded), when heat aged for 3000 hours over the entire temperature range of from 190°C to 230°C, and measured at 23°C. Such heat age performance over the 190°C to 230°C range illustrates the unexpected performance of the disclosed polyamide compositions over the entire temperature gap.

Individual comparisons also support the showing of the synergies of the disclosed formulations. As one example, the comparison of Example 1 and Comparative Example A demonstrate the surprising, synergistic effect of the disclosed stabilizer package. Comparative Example A utilizes only a copper stabilizer, while Example 1 utilizes a copper stabilizer and a cerium-based stabilizer. At 210°C, tensile strength for Comparative Example A was 25.8 MPa and 1.4 MPa for 2000 and 3000 hours, respectively. Surprisingly, Example 1 demonstrated tensile strengths of 125.1 MPa (385% increase) and 81.6 MPa (5700% increase) under the same test conditions. The magnitude of these improvements is unexpected.

As another example, at 210°C, impact resistance for Comparative Example A was 6.3 kJ/m² and 0.5 kJ/m²for 2000 and 3000 hours, respectively. Surprisingly, Example 1 demonstrated impact resistances of 22.6 kJ/m² (260% increase) and 13.0 kJ/m² (2600% increase) under the same test conditions.

Importantly, in many cases, performance surprisingly improves as temperature increases. For example, in Table 2c, at 210°C and 3000 hour tensile strengths for the working Examples ranged from 3 - 156 MPa, but at 230°C (Table 2e), tensile strengths for the working Examples ranged from 147 - 215 MPa. Heat age performance increases at higher temperature is highly unexpected.

The tables are replete with hundreds of similar comparisons. And similar analysis is applicable to the other performance characteristics.

## Claims

1. A heat-stabilized polyamide composition comprising:
from 25 wt% to 90 wt% of an amide polymer, optionally comprising a first amide polymer and a second amide polymer;
from 0.01 wt% to 10 wt% of a cerium-based heat stabilizer;
a second heat stabilizer, optionally present in an amount ranging from 0.01 wt% to 5 wt%,
a halide additive, and
less than 0.3 wt% of a stearate additive,
wherein a weight ratio of halide additive to stearate additive is less than 45.0, and wherein the polyamide composition optionally has a tensile strength of at least 75 MPa, when heat aged for 3000 hours at a temperature of 180°C and measured at 23°C or
wherein the polyamide composition optionally has a tensile strength of at least 75 MPa, when heat aged for 3000 hours over a temperature range of from 190°C to 230°C, and measured at 23°C,
wherein the tensile strength measurement is conducted under ISO 527-1 (2018 or 2019), and the heat aging measurement is conducted under ISO 188 (2018 or 2019).

2. The polyamide composition of claim 1, wherein the weight ratio of the cerium-based heat stabilizer to the second heat stabilizer ranges from 0.1 to 8.5 and/or the weight ratio of halide additive to the stearate additive is less than 10.

3. The polyamide composition of any of the preceding claims, wherein the second heat stabilizer comprises greater than 350 wppm copper-based compound.

4. The polyamide composition of any of the preceding claims, wherein the cerium-based heat stabilizer is a cerium ligand compound selected from the group consisting of cerium hydrates, cerium acetates, cerium oxyhydrate, cerium phosphate, and combinations thereof.

5. The polyamide composition of any of the preceding claims, wherein the activation temperature of the cerium-based heat stabilizer, measured in degrees centigrade, is at least 10% greater than the activation temperature of the second heat stabilizer, measured in degrees centigrade.

6. The polyamide composition of any of the preceding claims, wherein the cerium-based heat stabilizer is a cerium-based ligand compound; wherein the second heat stabilizer is a copper-based heat stabilizer, and wherein the polyamide composition has a tensile strength of at least 80 MPa, when heat aged for 3000 hours at a temperature of at least 220 °C and measured at 23°C.

7. A heat-stabilized polyamide composition comprising:
from 25 wt% to 99 wt% of an amide polymer comprising:
greater than 90 wt%, based on the total weight of the amide polymer, of a low caprolactam content polyamide; and
less than 10 wt%, based on the total weight of the amide polymer, of a non-low caprolactam content polyamide,
the low caprolactam content polyamide being defined as a polyamide having 50 wt.% or less of caprolactam,
from 0.01 wt% to 10 wt% of a cerium-based heat stabilizer, and
a second heat stabilizer;
wherein the polyamide composition optionally has a tensile strength of at least 75 MPa, when heat aged for 3000 hours over a temperature range of from 190°C to 230°C, and measured at 23°C,
wherein the tensile strength measurement is conducted under ISO 527-1 (2018 or 2019), and the heat aging measurement is conducted under ISO 188 (2018 or 2019).

8. The polyamide composition of claim 7, wherein the low caprolactam content polyamide comprises PA-6,6/6; PA-6T/6; PA-6,6/6T/6; PA-6,6/6I/6; PA-6I/6; or 6T/6I/6; or combinations thereof.

9. The polyamide composition of claim 7 or claim 8, wherein the low caprolactam content polyamide comprises less than 50 wt% caprolactam.

10. A heat-stabilized polyamide composition comprising:
from 25 wt% to 99 wt% of an amide polymer comprising:
greater than 90 wt%, based on the total weight of the amide polymer, of a low melt temperature polyamide; and
less than 10 wt%, based on the total weight of the amide polymer, of a non-low melt temperature polyamide;
the low melt temperature polyamide being defined as a polyamide having a melt temperature below 210°C,
from 0.01 wt% to 10 wt% of a cerium-based heat stabilizer, and
a second heat stabilizer,
wherein the polyamide composition optionally has a tensile strength of at least 75 MPa, when heat aged for 3000 hours over a temperature range of from 190°C to 230°C, and measured at 23°C,
wherein the tensile strength measurement is conducted under ISO 527-1 (2018 or 2019), and the heat aging measurement is conducted under ISO 188 (2018 or 2019).

11. The polyamide composition of claim 10, wherein the low melt temperature polyamide comprises PA-6,6/6; PA-6T/6; PA-6,6/6I/6; PA-6I/6; or 6T/6I/6; or combinations thereof.

12. The polyamide composition of claim 10 or claim 11, wherein the low melt temperature polyamide has a melt temperature below 210°C.

13. A heat-stabilized polyamide composition comprising:
from 25 wt% to 99 wt% of an amide polymer
from 0.01 wt% to 10 wt% of cerium oxide and/or cerium oxyhydrate, optionally present in an amount ranging from 10 ppm to 9000 ppm,
a second heat stabilizer,
a halide additive, and
less than 0.3 wt% of a stearate additive,
wherein a weight ratio of halide additive to stearate additive is less than 45.0, and
wherein the polyamide composition has a tensile strength of at least 75 MPa, when heat aged for 3000 hours over a temperature range of from 190°C to 230°C, and measured at 23°C,
wherein the tensile strength measurement is conducted under ISO 527-1 (2018 or 2019), and the heat aging measurement is conducted under ISO 188 (2018 or 2019).

14. The polyamide composition of claim 13, wherein the polyamide composition comprises iodide present in an amount ranging from 30 wppm to 5000 wppm.

15. The polyamide composition of any one of claims 13 - 14, wherein the amide polymer comprises:
greater than 90 wt%, based on the total weight of the amide polymer, of the low caprolactam content polyamide; and
less than 10 wt%, based on the total weight of the amide polymer, of the non-low caprolactam content polyamide or the non-low melt temperature polyamide.

## Patentansprüche

1. Wärmestabilisierte Polyamidzusammensetzung, umfassend:
25 Gew.-% bis 90 Gew.-% eines Amidpolymers, optional umfassend ein erstes Amidpolymer und ein zweites Amidpolymer,
0,01 Gew.-% bis 10 Gew.-% eines Wärmestabilisators auf Cer-Basis,
einen zweiten Wärmestabilisator, der optional in einer Menge im Bereich von 0,01 Gew.-% bis 5 Gew.-% vorhanden ist,
ein Halogenid-Additiv und
weniger als 0,3 Gew.-% eines Stearat-Additivs,
wobei das Gewichtsverhältnis von Halogenid-Additiv zu Stearat-Additiv weniger als 45,0 beträgt und wobei die Polyamidzusammensetzung optional eine Zugfestigkeit von mindestens 75 MPa aufweist, wenn sie für 3000 Stunden bei einer Temperatur von 180 °C wärmegealtert und bei 23 °C gemessen wird, oder
wobei die Polyamidzusammensetzung optional eine Zugfestigkeit von mindestens 75 MPa aufweist, wenn sie für 3000 Stunden in einem Temperaturbereich von 190 °C bis 230 °C wärmegealtert und bei 23 °C gemessen wird,
wobei die Zugfestigkeitsmessung gemäß ISO 527-1 (2018 oder 2019) durchgeführt wird und die Wärmealterungsmessung gemäß ISO 188 (2018 oder 2019) durchgeführt wird.

2. Polyamidzusammensetzung nach Anspruch 1, wobei das Gewichtsverhältnis des Wärmestabilisators auf Cer-Basis zum zweiten Wärmestabilisator im Bereich von 0,1 bis 8,5 liegt und/oder das Gewichtsverhältnis des Halogenid-Additivs zum Stearat-Additiv weniger als 10 beträgt.

3. Polyamidzusammensetzung nach irgendeinem der vorhergehenden Ansprüche, wobei der zweite Wärmestabilisator mehr als 350 wppm einer Verbindung auf Kupfer-Basis umfasst.

4. Polyamidzusammensetzung nach irgendeinem der vorhergehenden Ansprüche, wobei der Wärmestabilisator auf Cer-Basis eine Cer-Ligandenverbindung, ausgewählt aus der Gruppe bestehend aus Cerhydraten, Ceracetaten, Ceroxidhydrat, Cerphosphat und Kombinationen davon, ist.

5. Polyamidzusammensetzung nach irgendeinem der vorhergehenden Ansprüche, wobei die Aktivierungstemperatur des Wärmestabilisators auf Cer-Basis, gemessen in Grad Celsius, mindestens 10 % höher ist als die Aktivierungstemperatur des zweiten Wärmestabilisators, gemessen in Grad Celsius.

6. Polyamidzusammensetzung nach irgendeinem der vorhergehenden Ansprüche, wobei der Wärmestabilisator auf Cer-Basis eine Ligandenverbindung auf Cer-Basis ist, wobei der zweite Wärmestabilisator ein Wärmestabilisator auf Kupfer-Basis ist, und wobei die Polyamidzusammensetzung eine Zugfestigkeit von mindestens 80 MPa aufweist, wenn sie für 3000 Stunden bei einer Temperatur von mindestens 220 °C wärmegealtert und bei 23 °C gemessen wird.

7. Wärmestabilisierte Polyamidzusammensetzung, umfassend:
25 Gew.-% bis 99 Gew.-% eines Amidpolymers, umfassend:
mehr als 90 Gew.-%, bezogen auf das Gesamtgewicht des Amidpolymers, eines Polyamids mit niedrigem Caprolactam-Gehalt, und
weniger als 10 Gew.-%, bezogen auf das Gesamtgewicht des Amidpolymers, eines Polyamids mit nicht niedrigem Caprolactam-Gehalt,
wobei das Polyamid mit niedrigem Caprolactam-Gehalt als ein Polyamid mit 50 Gew.-% oder weniger Caprolactam definiert ist,
0,01 Gew.-% bis 10 Gew.-% eines Wärmestabilisators auf Cer-Basis und
einen zweiten Wärmestabilisator,
wobei die Polyamidzusammensetzung optional eine Zugfestigkeit von mindestens 75 MPa aufweist, wenn sie für 3000 Stunden in einem Temperaturbereich von 190 °C bis 230 °C wärmegealtert und bei 23 °C gemessen wird, wobei die Zugfestigkeitsmessung gemäß ISO 527-1 (2018 oder 2019) durchgeführt wird und die Wärmealterungsmessung gemäß ISO 188 (2018 oder 2019) durchgeführt wird.

8. Polyamidzusammensetzung nach Anspruch 7, wobei das Polyamid mit niedrigem Caprolactam-Gehalt PA-6,6/6, PA-6T/6, PA-6,6/6T/6, PA-6,6/6I/6, PA-6I/6 oder 6T/6I/6 oder Kombinationen davon umfasst.

9. Polyamidzusammensetzung nach Anspruch 7 oder Anspruch 8, wobei das Polyamid mit niedrigem Caprolactam-Gehalt weniger als 50 Gew.-% Caprolactam umfasst.

10. Wärmestabilisierte Polyamidzusammensetzung, umfassend:
25 Gew.-% bis 99 Gew.-% eines Amidpolymers, umfassend:
mehr als 90 Gew.-%, bezogen auf das Gesamtgewicht des Amidpolymers, eines Polyamids mit niedriger Schmelztemperatur, und
weniger als 10 Gew.-%, bezogen auf das Gesamtgewicht des Amidpolymers, eines Polyamids mit nicht niedriger Schmelztemperatur wobei das Polyamid mit niedriger Schmelztemperatur als ein Polyamid mit einer Schmelztemperatur unter 210 °C definiert ist,
0,01 Gew.-% bis 10 Gew.-% eines Wärmestabilisators auf Cer-Basis und
einen zweiten Wärmestabilisator,
wobei die Polyamidzusammensetzung optional eine Zugfestigkeit von mindestens 75 MPa aufweist, wenn sie für 3000 Stunden in einem Temperaturbereich von 190 °C bis 230 °C wärmegealtert und bei 23 °C gemessen wird,
wobei die Zugfestigkeitsmessung gemäß ISO 527-1 (2018 oder 2019) durchgeführt wird und die Wärmealterungsmessung gemäß ISO 188 (2018 oder 2019) durchgeführt wird.

11. Polyamidzusammensetzung nach Anspruch 10, wobei das Polyamid mit niedriger Schmelztemperatur PA-6,6/6, PA-6T/6, PA-6,6/61/6, PA-61/6 oder 6T/6I/6 oder Kombinationen davon umfasst.

12. Polyamidzusammensetzung nach Anspruch 10 oder Anspruch 11, wobei das Polyamid mit niedriger Schmelztemperatur eine Schmelztemperatur unter 210 °C aufweist.

13. Wärmestabilisierte Polyamidzusammensetzung, umfassend:
25 Gew.-% bis 99 Gew.-% eines Amidpolymers,
0,01 Gew.-% bis 10 Gew.-% Ceroxid und/oder Ceroxidhydrat, der optional in einer Menge im Bereich von 10 ppm bis 9000 ppm vorhanden ist,
einen zweiten Wärmestabilisator,
ein Halogenid-Additiv und
weniger als 0,3 Gew.-% eines Stearat-Additivs,
wobei das Gewichtsverhältnis von Halogenid-Additiv zu Stearat-Additiv weniger als 45,0 beträgt und
wobei die Polyamidzusammensetzung eine Zugfestigkeit von mindestens 75 MPa aufweist, wenn sie für 3000 Stunden bei einer Temperatur von 190 °C bis 230 °C wärmegealtert und bei 23 °C gemessen wird,
wobei die Zugfestigkeitsmessung gemäß ISO 527-1 (2018 oder 2019) durchgeführt wird und die Wärmealterungsmessung gemäß ISO 188 (2018 oder 2019) durchgeführt wird.

14. Polyamidzusammensetzung nach Anspruch 13, wobei die Polyamidzusammensetzung Iodid in einer Menge im Bereich von 30 wppm bis 5000 wppm umfasst.

15. Polyamidzusammensetzung nach irgendeinem der Ansprüche 13-14, wobei das Amidpolymer Folgendes umfasst:
mehr als 90 Gew.-%, bezogen auf das Gesamtgewicht des Amidpolymers, des Polyamids mit niedrigem Caprolactam-Gehalt; und
weniger als 10 Gew.-%, bezogen auf das Gesamtgewicht des Amidpolymers, des Polyamids mit nicht niedrigem Caprolactam-Gehalt oder des Polyamids mit nicht niedriger Schmelztemperatur.

## Revendications

1. Composition de polyamide stabilisée à la chaleur comprenant :
de 25 % en poids à 90 % en poids d'un polymère d'amide, comprenant éventuellement un premier polymère d'amide et un second polymère d'amide ;
de 0,01 % en poids à 10 % en poids d'un stabilisant thermique à base de cérium ;
un second stabilisant thermique, éventuellement présent en une quantité allant de 0,01 % en poids à 5 % en poids, un additif halogénure, et
moins de 0,3 % en poids d'un additif stéarate,
dans laquelle le rapport pondéral de l'additif halogénure à l'additif stéarate est inférieur à 45,0, et dans laquelle la composition de polyamide a éventuellement une résistance à la traction d'au moins 75 MPa, lorsqu'elle est vieillie à chaud pendant 3000 heures à une température de 180 °C et mesurée à 23 °C ou
dans laquelle la composition de polyamide a éventuellement une résistance à la traction d'au moins 75 MPa, lorsqu'elle est vieillie à chaud pendant 3000 heures sur une plage de températures allant de 190 °C à 230 °C, et mesurée à 23 °C,
dans laquelle la mesure de la résistance à la traction est effectuée conformément à la norme ISO 527-1 (2018 ou 2019), et la mesure du vieillissement thermique est effectuée conformément à la norme ISO 188 (2018 ou 2019).

2. Composition de polyamide selon la revendication 1, dans laquelle le rapport pondéral du stabilisant thermique à base de cérium au second stabilisant thermique va de 0,1 à 8,5 et/ou le rapport pondéral de l'additif halogénure à l'additif stéarate est inférieur à 10.

3. Composition de polyamide selon l'une quelconque des revendications précédentes, dans laquelle le second stabilisant thermique comprend plus de 350 ppm en poids de composé à base de cuivre.

4. Composition de polyamide selon l'une quelconque des revendications précédentes, dans laquelle le stabilisant thermique à base de cérium est un composé ligand de cérium choisi dans le groupe constitué par les hydrates de cérium, les acétates de cérium, l'oxyhydrate de cérium, le phosphate de cérium et les combinaisons de ceux-ci.

5. Composition de polyamide selon l'une quelconque des revendications précédentes, dans laquelle la température d'activation du stabilisant thermique à base de cérium, mesurée en degrés centigrades, est au moins 10 % supérieure à la température d'activation du second stabilisant thermique, mesurée en degrés centigrades.

6. Composition de polyamide selon l'une quelconque des revendications précédentes, dans laquelle le stabilisant thermique à base de cérium est un composé ligand à base de cérium ; dans laquelle le second stabilisant thermique est un stabilisant thermique à base de cuivre, et dans laquelle la composition de polyamide a une résistance à la traction d'au moins 80 MPa, lorsqu'elle est vieillie à chaud pendant 3000 heures à une température d'au moins 220 °C et mesurée à 23 °C.

7. Composition de polyamide stabilisée à la chaleur comprenant :
de 25 % en poids à 99 % en poids d'un polymère d'amide comprenant :
plus de 90 % en poids, par rapport au poids total du polymère d'amide, d'un polyamide à faible teneur en caprolactame ; et
moins de 10 % en poids, par rapport au poids total du polymère d'amide, d'un polyamide à teneur en caprolactame non faible,
le polyamide à faible teneur en caprolactame étant défini comme un polyamide ayant 50 % en poids ou moins de caprolactame,
de 0,01 % en poids à 10 % en poids d'un stabilisant thermique à base de cérium, et
un second stabilisant thermique ;
dans laquelle la composition de polyamide a éventuellement une résistance à la traction d'au moins 75 MPa, lorsqu'elle est vieillie à chaud pendant 3000 heures sur une plage de températures allant de 190 °C à 230 °C, et mesurée à 23 °C,
dans laquelle la mesure de la résistance à la traction est effectuée conformément à la norme ISO 527-1 (2018 ou 2019), et la mesure du vieillissement thermique est effectuée conformément à la norme ISO 188 (2018 ou 2019).

8. Composition de polyamide selon la revendication 7, dans laquelle le polyamide à faible teneur en caprolactame comprend du PA-6,6/6 ; du PA-6T/6 ; du PA-6,6/6T/6 ; du PA-6,6/6I/6 ; du PA-6I/6 ; ou du 6T/6I/6 ; ou des combinaisons de ceux-ci.

9. Composition de polyamide selon la revendication 7 ou la revendication 8, dans laquelle le polyamide à faible teneur en caprolactame comprend moins de 50 % en poids de caprolactame.

10. Composition de polyamide stabilisée à la chaleur comprenant :
de 25 % en poids à 99 % en poids d'un polymère d'amide comprenant :
plus de 90 % en poids, par rapport au poids total du polymère d'amide, d'un polyamide à basse température de fusion ; et
moins de 10 % en poids, par rapport au poids total du polymère d'amide, d'un polyamide température de fusion non basse ;
le polyamide à basse température de fusion étant défini comme un polyamide ayant une température de fusion inférieure à 210 °C,
de 0,01 % en poids à 10 % en poids d'un stabilisant thermique à base de cérium, et
un second stabilisant thermique,
dans laquelle la composition de polyamide a éventuellement une résistance à la traction d'au moins 75 MPa, lorsqu'elle est vieillie à chaud pendant 3000 heures sur une plage de températures allant de 190 °C à 230 °C, et mesurée à 23 °C,
dans laquelle la mesure de la résistance à la traction est effectuée conformément à la norme ISO 527-1 (2018 ou 2019) et la mesure du vieillissement thermique est effectuée conformément à la norme ISO 188 (2018 ou 2019).

11. Composition de polyamide selon la revendication 10, dans laquelle le polyamide à basse température de fusion comprend du PA-6,6/6 ; du PA-6T/6 ; du PA-6,6/6I/6 ; du PA-6I/6 ; ou du 6T/6I/6 ; ou des combinaisons de ceux-ci.

12. Composition de polyamide selon la revendication 10 ou la revendication 11, dans laquelle le polyamide à basse température de fusion a une température de fusion inférieure à 210 °C.

13. Composition de polyamide stabilisée à la chaleur comprenant :
de 25 % en poids à 99 % en poids d'un polymère d'amide de 0,01 % en poids à 10 % en poids d'oxyde de cérium et/ou d'oxyhydrate de cérium, éventuellement présents en une quantité allant de 10 ppm à 9000 ppm,
un second stabilisant thermique,
un additif halogénure, et
moins de 0,3 % en poids d'un additif stéarate,
dans laquelle le rapport pondéral de l'additif halogénure à l'additif stéarate est inférieur à 45,0, et
dans laquelle la composition de polyamide a une résistance à la traction d'au moins 75 MPa, lorsqu'elle est vieillie à chaud pendant 3 000 heures sur une plage de températures allant de 190 °C à 230 °C, et mesurée à 23 °C,
dans laquelle la mesure de la résistance à la traction est effectuée conformément à la norme ISO 527-1 (2018 ou 2019) et la mesure du vieillissement thermique est effectuée conformément à la norme ISO 188 (2018 ou 2019).

14. Composition de polyamide selon la revendication 13, dans laquelle la composition de polyamide comprend de l'iodure présent dans une quantité allant de 30 ppm en poids à 5 000 ppm en poids.

15. Composition de polyamide selon l'une quelconque des revendications 13 et 14, dans laquelle le polymère d'amide comprend :
plus de 90 % en poids, par rapport au poids total du polymère d'amide, du polyamide à faible teneur en caprolactame ; et
moins de 10 % en poids, par rapport au poids total du polymère d'amide, du polyamide à teneur en caprolactame non faible ou du polyamide à température de fusion non basse.
